(19) Europäisches Patentamt
European Patent Office
Office européen des brevets

(11) **EP 3 820 270 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **18826672.0**

(22) Anmeldetag: **20.12.2018**

(51) Internationale Patentklassifikation (IPC):
*A01C 7/08* *(2006.01)*     *A01C 7/20* *(2006.01)*
*A01C 7/04* *(2006.01)*

(52) Gemeinsame Patentklassifikation (CPC):
**A01C 7/0443; A01C 7/0445; A01C 7/046;**
**A01C 7/206;** A01C 7/081

(86) Internationale Anmeldenummer:
**PCT/EP2018/086245**

(87) Internationale Veröffentlichungsnummer:
**WO 2020/011386 (16.01.2020 Gazette 2020/03)**

(54) **VEREINZELUNGSVORRICHTUNG ZUR DRUCKDIFFERENZ-BASIERTEN VEREINZELUNG VON KÖRNERN, VERFAHREN ZUR VEREINZELUNG VON KÖRNERN UND LANDWIRTSCHAFTLICHE REIHENEINHEIT**

SINGULATING DEVICE FOR SINGULATING SEEDS ON THE BASIS OF A PRESSURE DIFFERENCE, METHOD FOR SINGULATING SEEDS, AND AGRICULTURAL ROW UNIT

DISPOSITIF DE DOSAGE MONOGRAINE DESTINÉ AU DOSAGE DE SEMENCES BASÉ SUR UNE DIFFÉRENCE DE PRESSION, PROCÉDÉ DE DOSAGE DE SEMENCES ET UNITÉ DE RANGÉE AGRICOLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2018 DE 102018116639**

(43) Veröffentlichungstag der Anmeldung:
**19.05.2021 Patentblatt 2021/20**

(73) Patentinhaber: **Horsch Maschinen GmbH 92421 Schwandorf (DE)**

(72) Erfinder:
• **HORSCH, Philipp**
  **92421 Schwandorf (DE)**
• **KÖBLER, Manfred**
  **92421 Schwandorf (DE)**

(74) Vertreter: **v. Bezold & Partner Patentanwälte - PartG mbB**
  **Ridlerstraße 57**
  **80339 München (DE)**

(56) Entgegenhaltungen:
EP-A1- 0 037 775      WO-A1-2015/149728
DE-A1- 102007 062 967      US-A1- 2014 182 495

**Beschreibung**

Die Erfindung betrifft eine Vereinzelungsvorrichtung (Dosiervorrichtung), insbesondere zur Montage an eine landwirtschaftliche Reiheneinheit und/oder zur Druckdifferenz-basierten Vereinzelung von Körnern (z.B. Saatgut, Dünger oder anderes Verteilgut, etc.). Die Erfindung umfasst insbesondere nach dem Überdruck-Prinzip arbeitende Vereinzelungsvorrichtungen. Die Erfindung betrifft zudem ein Verfahren zur Vereinzelten Abgabe von Körnern sowie eine landwirtschaftliche Reiheneinheit mit einer derartigen Vereinzelungsvorrichtung und/oder zur Ausführung eines derartigen Verfahrens.

Zum Stand der Technik kann zunächst verwiesen werden auf die US 2014/182495 A1, die DE 10 2007 062967 A1, die WO 2015/149728 A1 und die EP 0 037 775 A1.

Aus dem Stand der Technik ist z.B. die WO 2010 059 101 A1 bekannt, die eine Druckdifferenz-basierte, bzw. eine Überdruck-basierte Vereinzelungsvorrichtung offenbart, bei der vereinzelte Körner Druckluft-beschleunigt durch eine Kornleitung zu einer Saatfurche transportiert werden. Wobei sowohl die Erzeugung der Druckdifferenz zur Vereinzelung der Körner als auch der Druckluft-beschleunigte Transport der Körner durch die Kornleitung mittels einer einzigen Druckluftzufuhr erfolgen, bzw. mittels des in einer Vereinzelungskammer herrschenden bzw. anliegenden Überdrucks erfolgen. Ein Druckluft-beschleunigter Transport der Körner hin zum Ackerboden ist zwar für manche Kornsorten vorteilhaft, für andere Kornsorten aber eher ungeeignet. Außerdem neigen die gegenüber den Ausgängen der Kornleitungen angeordneten Fangelemente, welche bei einem Druckluft-beschleunigten Transport der Körner benötigt werden, dazu, bei feuchten, klebrigen Böden mit Erde zu verschmutzen, was zu fehlerhaften Kornabgaben führen kann. Zudem ist durch die Verwendung von nur einer Druckluftzufuhr eine Anpassung an die Vereinzelung und/oder den Transport der Körner durch die Kornleitung auf verschiedene Kornsorten nur bedingt möglich. Zudem werden bei einem derartigen System mitunter Hohe Überdruckniveaus benötigt.

Aus dem Stand der Technik ist zudem die EP 3 050 419 B1 bekannt, die eine Überdruck-basierte Vereinzelungsvorrichtung offenbart, bei welcher vereinzelte Körner Druckluft-beschleunigt durch eine Kornleitung transportiert werden. Wobei sowohl zur Erzeugung der Druckdifferenz zur Vereinzelung der Körner als auch die Druckluft-Beschleunigung der Körner durch die Kornleitung mittels einer einzigen Druckluftzufuhr erfolgen kann, aber auch in einem Abgabebereich eine zusätzliche Druckluftzufuhr vorgesehen sein kann. Zwar kann mit einem derartigen System eine gewisse Anpassung auf verschiedene Verteilgüter ermöglicht werden, nachteilig ist jedoch, dass sich die unterschiedlichen Druckluftzufuhren durch deren jeweiligen Luftströmungen bzw. deren Strömungsgeschwindigkeiten und deren Druckniveaus negativ beeinflussen können, da für diese keine aufeinander abgestimmte Dimensionierung vorgesehen ist. So kann es, aufgrund der nicht aufeinander abgestimmten Dimensionierung vorkommen, dass eine Übergabe von Körner von einem Vereinzelungsorgan in die Kornleitung nicht Reibungslos erfolgt oder auch gänzlich nicht möglich ist. Darüber hinaus dient die zusätzliche Druckluftzufuhr nicht zur pneumatischen Trennung zwischen der Druckluft aus dem Aufnahmebereich und der Kornleitung, sondern lediglich zur Unterstützung des Druckluft-beschleunigten Transport der Körner in der Kornleitung, insbesondere sieht das System jedoch keine Unterbindung einer Luftströmung aus einem Aufnahmebereich durch eine Kornleitung vor.

Eine Aufgabe der Erfindung ist es deshalb, insbesondere eine verbesserte und/oder alternative Vereinzelungsvorrichtung zu schaffen, vorzugsweise eine z.B. für unterschiedliche Kornsorten und/oder für unterschiedliche Bodenverhältnisse universell einsetzbare Vereinzelungsvorrichtung.

Diese Aufgaben werden gelöst durch eine Vereinzelungsvorrichtung mit den Merkmalen des unabhängigen Anspruchs 1, sowie durch ein Verfahren zur Vereinzelung von Körnern mit den Merkmalen des Verfahrensanspruchs 22, sowie durch eine landwirtschaftliche Reiheneinheit mit den Merkmalen des Anspruchs 23. Vorteilhafte Weiterbildungen sind in den abhängigen Ansprüchen und der Beschreibung angegeben.

Die Erfindung betrifft eine Vereinzelungsvorrichtung (zweckmäßig Dosiervorrichtung), vorzugsweise zur zweckmäßigen Montage an eine landwirtschaftliche Reiheneinheit und/oder zur Druckdifferenz-basierten und insbesondere zur Überdruck-basierten Vereinzelung von Körnern (z.B. Saatgut, Dünger oder anderes Verteilgut, etc.). Wobei die Reiheneinheit, vorzugsweise jedoch zumindest zwei derartige Reiheneinheiten, an einer landwirtschaftlichen Maschine montierbar ist.

Die Erfindung kann zweckmäßig bei generell nach dem Prinzip der Druckdifferenz (Differenzdruckprinzip) arbeitenden Vereinzelungsvorrichtungen eingesetzt werden und umfasst insbesondere mit positiver Druckluft und somit insbesondere mit Überdruck, d.h. mit einem Überdruck der größer als der Atmosphärendruck ist, arbeitende Vereinzelungsvorrichtungen.

Die Vereinzelungsvorrichtung umfasst vorzugsweise eine Kammer, z. B. zur Aufnahme der jeweils auszubringenden bzw. zu verteilenden Körner, sowie ein drehbares Vereinzelungsorgan, wobei die Kammer zumindest in eine Richtung durch eine durch das Vereinzelungsorgan gebildete Wand begrenzt ist und wobei mittels des Vereinzelungsorgans Körner aus der Kammer zu einem Abgabebereich transportiert werden können und/oder wobei mittels des Vereinzelungsorgans Körner aus der Kammer zu einer dem Abgabebereich zugeordneten Kornleitung transportiert werden können.

Darüber hinaus umfasst die Vereinzelungsvorrichtung eine erste Druckluftzufuhr, welche in der Kammer mündet (z.B. wirkverbunden ist) und mittels der, der Kammer Druckluft zur Erzeugung zumindest einer Druckdifferenz zuführbar ist, wobei das Vereinzelungsorgan eine Vielzahl an Aussparungen für die Körner aufweist und die Körner durch die durch die erste Druckluftzufuhr bereitgestellte Druckluft, Druckdifferenz-basiert in den Aussparungen haltbar sind.

Darüber hinaus umfasst die Vereinzelungsvorrichtung einen Abgabebereich zur Abgabe vereinzelter Körner, insbesondere vom Vereinzelungsorgan in eine Kornleitung, zum Verteilen vereinzelter Körner auf oder in einem Ackerboden (z.B. Saatfurche).

Um eine verbesserte und/oder alternative Vereinzelungsvorrichtung zu schaffen, vorzugsweise eine z.B. für unterschiedliche Kornsorten und/oder für unterschiedliche Bodenverhältnisse universell einsetzbare Vereinzelungsvorrichtung zu schaffen sieht die Erfindung eine zweite Druckluftzufuhr vor, welche zweite Druckluftzufuhr zur Unterbindung einer Luftströmung aus der Kammer in die Kornleitung und zum Druckluftbeschleunigten Transport der Körner durch die Kornleitung dient.

Die zweite Druckluftzufuhr kann bspw. im Abgabebereich und/oder in der Kornleitung münden (z.B. wirkverbunden sein). Zudem kann die zweite Druckluftzufuhr derart definiert und dimensioniert sein, dass eine Luftströmung aus der Kammer in der Kornleitung und/oder durch die Kornleitung unterbunden wird.

Die Definition der Dimensionierung kann bspw. geometrisch erfolgen, d.h. bspw. durch entsprechende Querschnitte der zweiten Druckluftzufuhr.

Die Kammer kann im vorliegenden zweckmäßig insbesondere durch den Bereich der Vereinzelungsvorrichtung gebildet (z. B. definiert) sein, in welchem Körner Druckdifferenz-basiert von einem Vereinzelungsorgan aufgenommen und gehalten werden. Wobei die Erzeugung der Druckdifferenz zweckmäßig mittels einer ersten Druckluftzufuhr erfolgen kann.

Der Abgabebereich kann im vorliegenden zweckmäßig insbesondere durch den Bereich der Vereinzelungsvorrichtung definiert sein, in welchem Körner nicht mehr Druckdifferenz-basiert am Vereinzelungsorgan gehalten werden. Insbesondere kann der Abgabebereich durch den Bereich der Vereinzelungsvorrichtung definiert sein, in welchem die Körner, nachdem diese Druckdifferenz-basiert am Vereinzelungsorgan gehalten wurden, durch eine Unterbrechung der Druckdifferenz an den Aussparungen des Vereinzelungsorgan nicht mehr am Vereinzelungsorgan gehalten werden. Der Abgabebereich kann durch den Bereich gebildet werden in welchem die Körner, durch eine Unterbrechung der Druckdifferenz an den Aussparungen des Vereinzelungsorgans nicht mehr am Vereinzelungsorgan gehalten werden und mittels einer, mittels einer zweiten Druckluftzufuhr bereitgestellten Luftströmung Druckluft-beschleunigt durch die Kornleitung transportiert werden.

Die verbesserte und/oder alternative Vereinzelungsvorrichtung kann zudem bzw. insbesondere derartig ausgeführt sein, dass die mittels der zweiten Druckluftzufuhr bereitgestellte Druckluft derartig definiert und dimensioniert ist, dass kein Volumenstrom (insbesondere Luftvolumenstrom) aus der Kammer durch die Kornleitung erzeugt wird, d.h. der Druckluft-beschleunigte Transport der Körner in und/oder durch die Kornleitung wird unabhängig vom in der Kammer anliegenden und/oder die Druckdifferenz erzeugenden Druck bzw. Druckniveau ermöglicht.

Insbesondere kann die verbesserte und/oder alternative Vereinzelungsvorrichtung derartig ausgeführt sein, dass die mittels der zweiten Druckluftzufuhr bereitgestellte Druckluft derartig definiert und dimensioniert ist, dass kein Volumenstrom (insbesondere Luftvolumenstrom) aus der Kammer durch die Kornleitung erzeugt wird, das heißt z. B. insbesondere, dass der Druckluftbeschleunigte Transport der Körner in und/oder durch die Kornleitung wird zumindest weitgehend unabhängig vom in der Kammer anliegenden und/oder die Druckdifferenz erzeugenden Druck bzw. Druckniveau ermöglicht.

Die Unterbindung einer Luftströmung aus der Kammer in die Kornleitung und zum Druckluft-beschlenigten Transport der Körner durch die Kornleitung kann im vorliegenden vorzugsweise einer wesentlichen Unterbindung einer Luftströmung aus der Kammer entsprechen, so dass die Beschleunigung der Körner zum Druckluft-beschleunigten Transport der Körner durch die Kornleitung zum Großteil mittels der mittels der zweiten Druckluftzufuhr erzeugten Luftströmung erfolgt. Zweckmäßig kann vorgesehen sein, dass die mittels der ersten Druckluftzufuhr erzeugte Luftströmung für den Druckluft-beschleunigten Transport der Körner durch die Kornleitung vernachlässigbar ist.

Die Vereinzelungsvorrichtung wird insbesondere an einer, vorzugsweise an einer landwirtschaftlichen Maschine montierbaren, Reiheneinheit montiert, wobei die Reiheneinheit hierfür eine Rahmenkonstruktion umfasst und wobei die Vereinzelungsvorrichtung räumlich der Rahmenkonstruktion der Reiheneinheit zugeordnet sein kann, insbesondere ist die Vereinzelungsvorrichtung fest mit einer die Komponenten der Reiheneinheit tragenden Rahmenkonstruktion verbunden.

Die Reiheneinheit dient u.a. zur Erzeugung einer Saatfurche, in welche Saatfurche die jeweiligen Körner abgelegt werden können. Zur Erzeugung der Saatfurche sind der Reiheneinheit entsprechende Saatfurchenerzeugende-Werkzeuge zugeordnet, z. B. in Form von zwei in einem Winkel zueinander angeordneten Schneidscheiben oder Zinkenwerkzeuge oder dergl. Auch können der Reiheneinheit Saatfurchenschließende-Werkzeuge wie Druckrollen oder Schließrollen oder dergl. zugeordnet sein. Auch diverse andere Werkzeuge können zudem vorgesehen sein und schwenkbar und/oder drehend und/oder fest mit der Rahmenkonstruktion verbunden bzw. wirkverbunden sein.

Es ist möglich, dass die Vereinzelungsvorrichtung eine Kammer (z.B. Saatgutvorratsbereich, Aufnahmebereich oder dergl.) zur Aufnahme und insbesondere Bevorratung der Körner aufweist, und zumindest ein (z.

B. im wesentlichen Scheiben-, Teller-, oder Trommelförmiges) drehbares, die Kammer zumindest in eine Richtung durch eine durch dieses gebildete Wand begrenzendes, Vereinzelungsorgan (insbesondere Dosierorgan) aufweist, wobei das Vereinzelungsorgan eine Vielzahl an Aussparungen (z.B. Löcher, Schlitze, Taschen oder dergleichen) für die Körner aufweist und die Körner Druckdifferenz-basiert in den Aussparungen gehalten werden können. Die Aussparungen können vorzugsweise im Wesentlichen gleichmäßig voneinander beabstandet sein, z. B. entlang zumindest einer im Wesentlichen kreisförmigen Bahn.

Um die Körner aus der Kammer in den Abgabebereich zu fördern ist das Vereinzelungsorgan, insbesondere mittels eines motorischen Antriebs ( z.B. pneumatisch - und/oder hydraulisch und/oder elektrisch Betriebener Motor) drehend angetrieben und/oder drehend in einem Gehäuse der Vereinzelungsvorrichtung gelagert. Wobei zudem vorgesehen sein kann, dass die Drehgeschwindigkeit variabel einstellbar ist. Insbesondere kann die Drehgeschwindigkeit in Abhängigkeit einer Fahrtgeschwindigkeit der landwirtschaftlichen Maschine eingestellt werden, bspw. manuell oder automatisiert.

Die zu verteilenden Körner können der Vereinzelungsvorrichtung bzw. der Kammer mittels eines pneumatischen Fördersystems (z. B. Seed-on-Demand-System oder Nursing-System oder dergl.) zugeführt werden und/oder an der Reiheneinheit kann ein Vorratsbehälter zur Aufnahme und Weiterleitung der zu verteilenden Körner an die Kammer angebracht sein. Ebenso können dem Vorratsbehälter wiederum mittels eines pneumatischen Fördersystems Körner zugeführt werden. Wobei die Kammer jeweils derartig ausgeführt ist, dass in dieser eine Vielzahl von Körner aufgenommen bzw. bevorratet werden können.

Erfindungsgemäß kann zudem Vorgesehen sein, dass das mittels der ersten Druckluftzufuhr in der Kammer erzeugte Druckniveau derartig definiert und dimensioniert ist, dass dieses keine Auswirkungen auf das pneumatische Fördersystem hat, insbesondere kann vorgesehen sein, dass das Druckniveau im pneumatischen Fördersystem größer oder gleich zum Druckniveau im Aufnahmebereich der Kammer ist. Es ist zudem möglich, dass die Druckluft aus dem pneumatischen Fördersystem und die Druckluft aus dem Aufnahmebereich der Kammer mittels entsprechenden Vorrichtungen (z.B. Lochbleche) verbunden werden. Auch können die Druckniveaus mittels einer Steuerungs- und/oder Regelungseinrichtung entsprechend regelbar sein, bzw. geregelt werden.

Zur Druckdifferenz-basierten Vereinzelung von Körnern, sieht die Vereinzelungsvorrichtung eine erste Druckluftzufuhr (z.B. einen oder mehrere Druckluftanschlüsse) vor, welche in der Kammer mündet und über die der Kammer zweckmäßig positive Druckluft (zweckmäßig Überdruck) zur Erzeugung zumindest einer Druckdifferenz an den Aussparungen des Vereinzelungsorgans zuführbar ist. Wobei die positive Druckluft hierbei auf der Seite des Vereinzelungsorgans anliegt auf der sich Körner befinden und auf der gegenüberliegenden Seite der Körner am Vereinzelungsorgan ein geringeres Druckniveau, insbesondere der Atmosphärendruck anliegt.

Erfindungsgemäß ist vorgesehen, dass mittels der ersten Druckluftzufuhr ausschließlich die Erzeugung der Druckdifferenz an den Aussparungen des Vereinzelungsorgans erfolgt, jedoch nicht der Druckluft-beschleunigte Transport der Körner in und/oder durch eine Kornleitung zum Transport der Körner auf oder in den Ackerboden (z.B. in eine Saatfurche).

Um eine gleichmäßige Abgabe vereinzelter Körner vom Vereinzelungsorgan in eine Kornleitung (z.B. ein Saatrohr) zu ermöglichen, sowie um einen Druckluft-beschleunigten Transport vereinzelter Körner durch eine Kornleitung zu ermöglichen, umfasst die Vereinzelungsvorrichtung zudem einen Abgabebereich.

Zum Druckluft-beschleunigten Transport der Körner in der Kornleitung kann die zweite Druckluftzufuhr (z. B. ein oder mehrere Druckluftanschlüsse) im Abgabebereich und/oder zumindest abschnittweise in der Kornleitung münden, vorzugsweise derartig, dass die Körner durch die Kornleitung hindurchgeschossen und/oder aus der Kornleitung herausgeschossen werden, z. B. im Wesentlichen Tangential gegen ein, an der Reiheneinheit angebrachtes, Fangelement wie z. B. eine Fangrolle oder einen Seed-Firmer.

Es sei darauf hingewiesen, dass im vorliegenden Dokument der Druckluft-beschleunigte Transport der Körner sich auf Geschwindigkeiten bezieht, welche größer als die Erdbeschleunigung sind, so dass Körner bspw. mit bis zu 25km/h und mehr durch die Kornleitung "geschossen" werden.

Die Erfindungsgemäße Vereinzelungsvorrichtung zeichnet sich insbesondere dadurch aus, dass die mittels der zweiten Druckluftzufuhr bereitgestellte, insbesondere im Abgabebereich mündende Druckluft derartig definiert und dimensioniert ist, dass eine Luftströmung aus der Kammer durch die Kornleitung unterbunden wird, bzw. durch die durch die mittels der zweiten Druckluftzufuhr bereitgestellten Druckluft nicht mehr möglich ist, insbesondere dadurch nicht mehr möglich ist, dass diese eine pneumatische Strömungsbarriere ausbildet.

Eine für unterschiedliche Kornsorten universell einsetzbare Vereinzelungsvorrichtung lässt sich somit dadurch erreichen, dass die Kammer und die Kornleitung zumindest weitgehend pneumatisch getrennt sind, d.h. die Druckluft aus der Kammer hat keinen Einfluss auf den Druckluft-beschleunigten Transport der Körner in der Kornleitung und umgekehrt, wodurch Anpassungen des Druckluft-beschleunigten Transport der Körner, ohne eine negative Beeinflussung der Druckdifferenz-basierten Vereinzelung, ermöglicht werden.

In einer bevorzugten Ausführungsform der Erfindung ist vorgesehen, dass die mittels der zweiten Druckluftzufuhr bereitgestellte Druckluft eine Strömungsbarriere bzw. eine Luftbarriere für die in der Kammer durch die erste Druckluftzufuhr bereitgestellte Druckluft in Richtung der Kornleitung bildet, so dass keine Druckluft aus der Kammer über die Kornleitung entweichen kann bzw. so das insbesondere keine Luftströmung in der Kornleitung durch das in der Kammer anliegende Druckniveau erzeugt wird, insbesondere kein Druckluft-beschleunigter Transport von Körnern erzeugt wird.

Erfindungsgemäß ist es vorgesehen, dass die erste Druckluftzufuhr und die zweite Druckluftzufuhr derartig zueinander angeordnet sind, dass sich zwischen diesen der Coandä-Effekt ausbildet, d.h. die mittels der ersten Druckluftzufuhr erzeugte Luftströmung wirkt derartig auf die mittels der zweiten Druckluftzufuhr erzeugte Luftströmung ein, dass diese in Richtung der Kornleitung umgelenkt wird, ohne dass jedoch die mittels der ersten Druckluftzufuhr erzeugte Luftströmung ebenfalls in die Kornleitung gelangen kann.

Zweckmäßig ist insbesondere vorgesehen, dass die erste Druckluftzufuhr und die zweite Druckluftzufuhr derartig zueinander angeordnet und/oder dimensioniert sind, dass im Einlassbereich die von der zweiten Druckluftzufuhr bereitgestellte Luftströmung aufgrund eines sich einstellenden Coandä-Effekt in Richtung der Kornleitung geleitet wird.

Insbesondere ist zudem oder alternativ vorgesehen, dass die erste Druckluftzufuhr und die zweite Druckluftzufuhr derartig zueinander angeordnet und/oder dimensioniert sind, dass im Einlassbereich die von der ersten Druckluftzufuhr bereitgestellte Luftströmung aufgrund eines sich einstellenden Coandä-Effekt nicht in Richtung der Kornleitung geleitet wird.

Zweckmäßig kann insbesondere vorgesehen sein, dass der Coandä-Effekt derartig entsteht dass die mittels der ersten Druckluftzufuhr und die mittels der zweiten Druckluftzufuhr zugeführten Luftströmungen und/oder Druckniveaus derartig zueinander angeordnet und/oder dimensioniert sind, dass mittels der zweiten Druckluftzufuhr erzeugte Luftströmung entlang der mittels der ersten Druckluftzufuhr erzeugten Luftströmung gleitet und/oder auf diese trifft. Zweckmäßig insbesondere von einer die zweite Druckluftzufuhr bildenden Leitung in Richtung der Kornleitung.

Es ist möglich, dass die Strömungsbarriere durch einen sich einstellenden Coandä-Effekt gebildet wird.

Beispielsweise heißt das, dass die Strömungsbarriere vorzugsweise an der Position erzeugt werden kann, in der eine mittels der zweiten Druckluftzufuhr erzeugte Luftströmung entlang der mittels der ersten Druckluftzufuhr erzeugten Luftströmung gleitet und/oder auf diese trifft.

Es ist zudem möglich, dass im sich einstellenden Bereich des Coandä-Effekt die mittels der ersten Druckluftzufuhr und die mittels der zweiten Druckluftzufuhr bereitgestellten Druckniveaus und/oder Luftströmungen sich vermischen, jedoch wiederum die mittels der ersten Druckluftzufuhr bereitgestellte Luftströmung und/oder das Druckniveau keinen Druckluft-beschleunigten Transport der Körner durch die Kornleitung erzeugt und die mittels der zweiten Druckluftzufuhrt bereitgestellte Luftströmung und/oder das Druckniveau keine Druckdifferenz am Vereinzelungsorgan erzeugt.

Die Erfindungsgemäße Vereinzelungsvorrichtung zeichnet sich somit gegenüber den aus dem Stand der Technik bekannten Vereinzelungsvorrichtungen dadurch aus, dass diese alle Vorteile einer Druckdifferenz-basierten Vereinzelung sowie eines Druckluft-beschleunigten Transport von Körnern umfasst, wobei jedoch sowohl die Druckdifferenz-basierte Vereinzelung als auch der Druckluft-beschleunigte Transport aufgrund der jeweils separaten Druckluftzufuhr und deren Definition und Dimensionierung zumindest weitgehend unabhängig voneinander variabel veränderbar sind.

Um eine Vereinzelungsvorrichtung zu schaffen bei welcher die Druckluft, das heißt das Druckniveau in der Kammer und im Abgabebereich jeweils zumindest weitgehend unabhängig voneinander Veränderbar ist, ist in einer bevorzugten Ausführungsform vorgesehen, dass der sich einstellende Totaldruck im Abgabebereich größer oder gleich zum sich einstellenden Totaldruck in der Kammer ist.

Insbesondere kann vorgesehen sein, dass der sich einstellende Totaldruck im Abgabebereich zumindest um den Faktor 1,5 oder 2 oder 2,5 oder 3 größer zu einem sich einstellenden Totaldruck in der Kammer ist.

Es ist möglich, dass die jeweiligen mittels der ersten Druckluftzufuhr und die mittels der zweiten Druckluftzufuhr bereitgestellten Druckniveaus, zweckmäßig statischen Druckniveaus, zumindest im Abgabebereich und/oder angrenzend zum Abgabebereich zumindest annähernd gleich sind. Es ist zudem möglich, dass das mittels der zweiten Druckluftzufuhr bereitgestellten Druckniveau, zweckmäßig dessen dynamisches Druckniveaus, zumindest im Abgabebereich und/oder angrenzend zum Abgabebereich größer zum mittels der ersten Druckluftzufuhr bereitgestellten Druckniveau, zweckmäßig dynamischen Druckniveau ist.

Eine bevorzugte Ausführungsvariante der Vereinzelungsvorrichtung kann vorsehen, dass der Totaldruck im Abgabebereich definiert ist, dass sich die durch die Druckluft aus der Kammer in Richtung des Abgabebereichs ergebende Strömungsgeschwindigkeit einer Luftströmung bis zumindest annähernd zum Stillstand verringert.

In Abhängigkeit des Verhältnis zwischen Totaldruck im Abgabebereich sowie des Totaldruck in der Kammer kann zudem die jeweilige Strömungsbarriere definiert werden, insbesondere auch dessen Position, d.h. je größer das Verhältnis bzw. die Differenz zwischen dem Totaldruck im Abgabebereich und dem Totaldruck in der Kammer ist, desto weiter verschiebt sich bspw. die Strömungsbarriere in Richtung zur Kammer, bzw. desto weiter verschiebt sich die Strömungsbarriere weg von einer Kornleitung. Insbesondere wird in Abhängigkeit des Totaldrucks im Abgabebereich zum Totaldruck in der Kammer der Abgabebereich größer oder kleiner, d.h. je größer der Totaldruck im Abgabebereich ist, desto größer ist dieser Abgabebereich.

Insbesondere kann die Erfindung vorsehen, dass sich die Strömungsbarriere an der Position einstellt, in der der sich in dieser einstellende Totaldruck gleich zum Totaldruck im Aufnahmebereich ist.

Die Erfindung kann insbesondere vorsehen, dass die sich einstellende Strömungsbarriere sich vor der Kornleitung befindet, insbesondere vor einem Einlassbereich einer Kornleitung.

Es ist möglich, dass mittels der ersten Druckluftzufuhr in der Kammer ein Druckniveau P1 (z.B. Überdruckniveau das größer als der Atmosphärendruck ist) erzeugt wird. Zudem kann vorgesehen sein, dass mittels der zweiten Druckluftzufuhr im Abgabebereich ein Druckniveau P2 (z.B. Überdruckniveau das größer als der Atmosphärendruck ist) erzeugt wird. Um eine Strömungsbarriere zwischen der Kammer und der Kornleitung zu schaffen kann erfindungsgemäß vorgesehen sein, dass das Druckniveau P1 kleiner oder gleich zum Druckniveau P2 ist, insbesondere jedoch dauerhaft kleiner ist, wobei auch wiederum in Abhängigkeit der Differenz des Druckniveau P1 zum Druckniveau P2 sich die Position der Strömungsbarriere in Richtung der Kammer bzw. weg von der Kornleitung verschiebt. Insbesondere wird in Abhängigkeit des Druckniveau P1 in der Kammer zum Druckniveau P2 im Abgabebereich der Abgabebereich größer oder kleiner, d.h. je größer das Druckniveau P2 im Abgabebereich ist, desto größer ist dieser Abgabebereich.

Die Strömungsbarriere wird insbesondere pneumatisch durch die unterschiedlichen Druckniveaus und/oder Totaldrücke gebildet, ohne hierfür Ventile oder dergl. zu benötigen.

Die Strömungsbarriere wird insbesondere pneumatisch in Abhängigkeit des Druckniveau P1 zum Druckniveau P2 erzeugt und/oder die Strömungsbarriere wird in Abhängigkeit des Totaldruck T1 und des Totaldruck T2 erzeugt.

Es ist möglich, dass die Querschnitte (insbesondere Strömungsquerschnitte) der ersten Druckluftzufuhr und der zweiten Druckluftzufuhr derartig dimensioniert sind (z.B. entsprechende Querschnitte aufweisen), dass die Strömungsgeschwindigkeiten der Luftströmungen im Abgabebereich größer als in der Kammer sind, die Strömungsgeschwindigkeiten im Abgabebereich aber nicht derartig groß sind, dass eine Übergabe bzw. ein Transport von Körner aus der Kammer in den Abgabebereich nicht mehr möglich ist bzw. Störungsbehaftet ist.

Das Druckniveau P1 kann bspw. 35mbar betragen sowie das Druckniveau P2 bspw. 36mbar, wobei auch hierbei wiederum andere Druckniveaus denkbar wären, wobei die Druckniveaus insbesondere in Abhängigkeit der jeweiligen Kornsorte (insbesondere Korngröße) variieren können.

Die Kornleitung umfasst einen Einlassbereich, welcher an den Abgabebereich anschließt und/oder durch diesen gebildet wird und einen Auslassbereich welcher im Betrieb der Vereinzelungsvorrichtung bzw. der Reiheneinheit in der Nähe und/oder in einer Saatfurche bzw. im Ackerboden angeordnet ist, bzw. läuft, wobei dem Auslassbereich zudem ein Fangelement nachgeordnet sein kann.

Der Verlauf der Kornleitung zwischen dem Einlassbereich und dem Auslassbereich kann zumindest abschnittweise bogenförmig und/oder geradlinig sein. Das Fangelement (z. B. Fangrolle, Seed-Firmer, oder dergl.) kann insbesondere derartig zum Auslassbereich angeordnet sein, dass eine Strömungsrichtung bzw. Flussrichtung von vereinzelten Körnern aus der Kornleitung tangential zum Fangelement verläuft, oder dass diese eine Winkelhalbierende zwischen einer tangentialen zum Fangelement und zu einer Bodenoberfläche bildet. Mittels des Fangelements können die Druckluftbeschleunigten Körner entsprechend abgebremst werden um somit ein Verrollen in der Saatfurche zu unterbinden.

Zudem kann die Kornleitung zwischen dem Einlassbereich und dem Auslassbereich in Bezug auf eine Vorwärtsrichtung der Reiheneinheit auf einer Ebene liegen, aber auch hierzu wiederum zumindest abschnittweise bogenförmig und/oder quer zu dieser verlaufen.

Die Kornleitung kann zudem aus einem flexiblen Material gefertigt sein oder aus einem nicht flexiblen Material gefertigt sein.

Die Kornleitung kann einen zumindest abschnittweise kreisförmigen Querschnitt aufweisen und/oder zumindest abschnittweise zylindrisch ausgebildet sein. Insbesondere kann die Kornleitung im Auslassbereich zylindrisch sein.

Die Kornleitung kann zwischen dem Einlassbereich und dem Auslassbereich einen konstanten Querschnitt oder einen sich zumindest abschnittweise verändernden Querschnitt aufweisen. Insbesondere kann der Einlassbereich einen größeren Querschnitt als der Auslassbereich aufweisen.

Es kann vorgesehen sein, dass an der Vereinzelungsvorrichtung bzw. am Abgabebereich verschiedene, insbesondere unterschiedliche Querschnitte aufweisende Kornleitungen montierbar sind. So das in Abhängigkeit der jeweiligen Korngrößen verschiedene Kornleitungen montiert werden können. Wobei hierfür an einem Gehäuse der Vereinzelungsvorrichtung entsprechende Vorrichtungen angebracht sein können, an welchen Vorrichtungen wiederum die verschiedenen Kornleitungen angebaut werden können. Zudem kann in Abhängigkeit der jeweiligen Kornleitung, der Totaldruck in der Kammer und/oder im Abgabebereich variieren bzw. entsprechend angepasst werden. Zweckmäßig manuell oder automatisiert.

Am Auslassbereich der Kornleitung liegt zudem beim Betrieb der Vereinzelungsvorrichtung der Atmosphärendruck $P_{amb}$ (Umgebungsdruck) an, d.h. der Überdruck beträgt hier 0 bar, wobei der Atmosphärendruck insbesondere kleiner als das Druckniveau P1 in der Kammer und das Druckniveau P2 im Abgabebereich ist.

Zudem liegt auf einer gegenüberliegenden Seite der Körner, am Vereinzelungsorgan ein geringeres Druckniveau als auf der Seite der Körner an, insbesondere wiederum der Atmosphärendruck $P_{amb}$ (Umgebungsdruck), wodurch an den Aussparungen des Vereinzelungsorgan eine entsprechende Druckdifferenz erzeugt wird, durch welche Druckdifferenz Körner an den Aussparungen im Betrieb der Vereinzelungsvorrichtung gehalten werden. Insbesondere wird durch die Druckdifferenz an den Aussparungen eine Luftströmung quer zum Vereinzelungsorgan und/oder senkrecht zu den Aussparungen des Vereinzelungsorgans erzeugt, durch welche Luftströmung Körner an den Aussparungen gehalten werden, bzw. an diese "gesaugt" werden.

Eine Bauweise der Vereinzelungsvorrichtung kann vorsehen bzw. eine bevorzugte Ausführung der Vereinzelungsvorrichtung kann vorsehen, dass im Betrieb dieser gilt, dass

$$P2 \geq P1 \geq P_{amb}$$

ist, insbesondere kann jedoch vorgesehen sein, dass im Betrieb dieser

$$P2 \geq P1 > P_{amb}$$

ist. Durch eine derartige Bauweise bzw. Ausführung der Vereinzelungsvorrichtung kann somit erreicht werden, dass eine ausreichende Druckdifferenz zur Aufnahme von Körner durch das Vereinzelungsorgan erzeugt wird sowie, dass ein Druckluft-beschleunigter Transport von Körner durch die Kornleitung unabhängig von der Druckdifferenz zur Aufnahme von Körner erfolgt.

Zur Unterbrechung der Druckdifferenz an den Aussparungen des Vereinzelungsorgans kann der Vereinzelungsvorrichtung bzw. dem Vereinzelungsorgan auf der gegenüberliegenden Seite der Körner im Abgabebereich ein Druckdifferenz-Unterbrechungselement (z.B. Abdichtelement, Rolle oder dergl.) zugeordnet sein. Wobei es zudem möglich ist, dass das Druckdifferenz-Unterbrechungselement zumindest abschnittweise gegenüber der, sich insbesondere zwischen dem Abgabebereich und der Kammer und/oder sich vor der Kornleitung einstellenden, Strömungsbarriere angeordnet ist und/oder dass das Druckdifferenz-Unterbrechungselement in Drehrichtung des Vereinzelungsorgan nach dieser Strömungsbarriere angeordnet ist.

Eine einfache Bauweise der Vereinzelungsvorrichtung ist erreichbar in dem der Abgabebereich durch eine in die Kammer bzw. durch eine in ein Gehäuse der Vereinzelungsvorrichtung mündende Kornleitung gebildet wird. Wobei erfindungsgemäß vorgesehen sein kann, dass die Kornleitung somit zwar räumlich der Kammer zugeordnet ist, jedoch aufgrund der sich mittels der ersten Druckluftzufuhr und der zweiten Druckluftzufuhr erzeugten Strömungsbarriere eine zumindest weitgehend pneumatische Trennung zwischen der Druckluft in der Kammer und der Kornleitung erfolgt.

Gemäß einem weiteren Aspekt der Erfindung ist der Abgabebereich insbesondere derartig definiert, dass in diesem keine Druckdifferenz an den Aussparungen erzeugbar ist, wodurch im Abgabebereich keine Körner mehr am Vereinzelungsorgan gehalten werden. Insbesondere ist der Abgabebereich derartig definiert, dass die Strömungsgeschwindigkeit der zweiten Druckluftzufuhr hierbei derartig groß ist, dass die Körner vom Vereinzelungsorgan gelöst werden und in Richtung und/oder durch die Kornleitung beschleunigt werden.

Der Abgabebereich kann insbesondere nicht durch eine Kammer zur Aufnahme von Körner gebildet sein, sondern durch eine Kornleitung zur Aufnahme der Körner und zum Transport der Körner in Richtung einer Saatfurche.

Es ist möglich, dass die zweite Druckluftzufuhr durch eine Luftleitung gebildet wird, welche die Kornleitung zumindest abschnittweise umgibt, wobei die Luftleitung hierfür einen größeren Innendurchmesser bzw. Innenquerschnitt aufweist als die Kornleitung einen Außendurchmesser bzw. Außenquerschnitt aufweist, durch den somit sich ergebenden Spalt kann somit wiederum die zweite Druckluftzufuhr erfolgen.

In der Luftleitung kann zudem ein größerer statischer Druck anliegen und es können geringere Strömungsgeschwindigkeiten einer Luftströmung in dieser vorhanden sein als in einem Abgabebereich und/oder in einer Kornleitung. Insbesondere ist das Druckniveau in der Luftleitung größer als das Druckniveau bzw. der Atmosphärendruck am Auslassbereich der Kornleitung. Durch die somit sich ergebende Druckdifferenz zwischen der Luftleitung und der Kornleitung wird eine Luftströmung in der Kornleitung erzeugt, durch welche Luftströmung in der Kornleitung ein Druckluft-beschleunigter Transport der Körner durch die Kornleitung erzeugt wird. Insbesondere ist die somit in der Kornleitung erzeugte Strömungsgeschwindigkeit der Luftströmung größer als eine Strömungsgeschwindigkeit einer Luftströmung aus der Kammer in Richtung des Abgabebereichs, wodurch keine Luftströmung aus der Kammer in der Kornleitung erzeugt wird.

Zur Versorgung der Luftleitung mit der entsprechenden Druckluft, kann diese zudem mit einer Druckluftquelle (z.B. Gebläse, insbesondere Überdruckgebläse) verbunden sein. Wobei auch wiederum die Druckluftquelle mittels einem, die Kornleitung umgebenden Element bzw. Anschluss mit der Luftleitung verbunden sein kann.

Die Luftleitung kann einen zumindest abschnittweise kreisförmigen und/oder zylindrischen Querschnitt aufweisen. Zudem kann die Luftleitung konzentrisch zur Kornleitung angebracht sein.

Die Luftleitung kann aus einem flexiblen Material gefertigt sein und entsprechend verformbar sein. Die Luftleitung kann aber auch einem nicht verformbaren Material gefertigt sein.

Es ist möglich dass in die Luftleitung, Kornleitungen mit verschiedenen Querschnitten einsetzbar sind, wobei dies jeweils derartig erfolgt, dass sich zwischen dem Innendurchmesser der Luftleitung und dem Außendurchmesser der Kornleitung ein Spalt ausbildet, durch welchen Spalt wiederum die zweite Druckluftzufuhr erfolgt. Wobei wiederum in Abhängigkeit der Größe des Spalt die Strömungsgeschwindigkeiten einer Luftströmung in dieser und/oder das statische Druckniveau verändert wird.

Es kann vorgesehen sein, dass der Querschnitt des Innendurchmessers der Luftleitung, dem zumindest 1,2-fachen oder zumindest 1,5-fachen oder zumindest 2-fachen oder zumindest dem 3-fachen des Querschnitt des Außendurchmessers der Kornleitung entspricht.

Es kann vorgesehen sein, dass an der Vereinzelungsvorrichtung bzw. im Gehäuse der Vereinzelungsvorrichtung verschiedene Luftleitungen und/oder Kornleitungen montierbar sind. Wobei hierfür insbesondere die Luftleitung und die Kornleitung eine Einheit bilden können und insbesondere fest miteinander verbunden sein können. Auch kann ein aus einer Luftleitung und Kornleitung bestehendes Segment an der Vereinzelungsvorrichtung (insbesondere in das Gehäuse einsetzbar) angebracht sein, wobei zur Montage ein Schnellwechselsystem vorgesehen sein kann, z.B. ein Clip-System, ein Rastelement-System, ein Splint-System oder ein Steck-System. Wobei wiederum bei einer derartigen Ausführung das Segment nur einen Teilabschnitt der Kornleitung und/oder der Luftleitung bilden kann an welche wiederum ein weiterer Abschnitt der Kornleitung und/oder eine Druckversorgung montierbar oder mit dieser verbindbar sein können. Insbesondere kann das Segment mittels eines Adapterelements an der Vereinzelungsvorrichtung angebracht werden.

Die Luftleitung und die Kornleitung können im Abgabebereich bündig zueinander sein, oder die Kornleitung kann weiter in den Abgabebereich hinein reichen als die Luftleitung, insbesondere kann die Kornleitung die Luftleitung in Richtung des Abgabebereichs überragen.

Es ist möglich, dass die Luftleitung zumindest abschnittweise, weiter in den Abgabebereich hineinreicht als die Kornleitung, wodurch eine noch gezieltere Luftströmung im der Kornleitung erzielbar ist.

Es ist möglich, dass die Luftleitung und die Kornleitung zueinander einstellbar sind, so dass bspw. einstellbar ist wie weit die Kornleitung und/oder die Luftleitung in den Abgabebereich hinein ragen und/oder wie weit diese an das Vereinzelungsorgan heran reichen.

Insbesondere die Kornleitung kann in Richtung des Vereinzelungsorgans eine Fase aufweisen und/oder eine Hinterschneidung aufweisen. Wobei ebenso die Luftleitung eine derartige Fase und/oder Hinterschneidung aufweisen kann.

Es ist möglich, dass die Querschnitte der Luftleitung und/oder der Kornleitung variabel einstellbar sind, zweckmäßig manuell oder automatisiert. Insbesondere können die Querschnitte stufenlos einstellbar sein.

Es kann vorgesehen sein, dass die Luftleitung zudem seitliche Öffnungen aufweist, mittels der Druckluft auch seitlich d.h. quer durch die Luftleitung entweichen kann, wodurch eine noch bessere Ausbildung einer Abgabebereich ermöglicht wird.

Die Anordnung zwischen der Luftleitung und der Kornleitung kann bspw. derartig sein, dass sich in diesen, d.h. dass durch diesen im Abgabebereich ein Injektor bzw. Ejector gebildet wird, durch welchen Ejector zum einen die Körner Druckluft-beschleunigt durch die Kornleitung transportiert werden und durch welchen Ejector zudem eine Abgabe der Körner vom Vereinzelungsorgan in die Kornleitung noch verbessert wird, insbesondere durch eine mittels des Ejector hervorgerufen Saugeffekt.

Die Strömungsrichtung der Luftströmung durch die Luftleitung kann insbesondere entgegensetzt zu der Drehrichtung des Vereinzelungsorgan sein, insbesondere in vertikaler Richtung von unten nach oben. Zweckmäßig kann vorgesehen sein, dass eine durch die zweite Druckluftzufuhr erzeugte Luftströmung ausgebildet ist, um eine Gegenströmung und/oder eine Strömungsbarriere relativ zu einer Luftströmung aus der Kammer in Richtung der Kornleitung zu erzeugen.

Zudem kann die Strömungsrichtung der Luftströmung in der Kornleitung in Drehrichtung des Vereinzelungsorgans orientiert sein, insbesondere in vertikaler Richtung von oben nach unten. Auch kann die Strömungsrichtung der Luftströmung durch die Luftleitung von unten nach oben parallel zum Verlauf der Luftleitung orientiert sein, sowie die Strömungsrichtung der Luftströmung in der Kornleitung von oben nach unten parallel zum Verlauf der Kornleitung orientiert sein.

Es ist möglich, dass die zweite Druckluftzufuhr quer in den Abgabebereich mündet, und/oder dass die zweite Druckluftzufuhr quer in das Gehäuse der Vereinzelungsvorrichtung mündet und somit den Abgabebereich ausbildet. Die mittels der zweiten Druckluftzufuhr bereitgestellte Druckluft erfolgt insbesondere quer von unten nach oben, insbesondere ist die in den Abgabebereich eingebrachte Luftströmung von unten nach oben orientiert (z.B. aus Richtung der Kornleitung in Richtung des Aufnahmebereich und/oder entgegengesetzt zu einer Drehrichtung des Vereinzelungsorgan). Die zweite Druckluftzufuhr ist insbesondere mit einer Druckluftquelle verbunden.

Es ist möglich, dass eine die zweite Druckluftzufuhr bildende Luftleitung relativ zum Vereinzelungsorgan angeordnet ist, insbesondere in einem Winkel zum Vereinzelungsorgan angeordnet ist. Erfindungsgemäß kann hierbei vorgesehen sein, dass der Winkel in einem Bereich zwischen 0° und 90° liegt und/oder in einem Bereich zwischen 45° und 80° liegt. Wobei 90° hierbei senkrecht umfasst und 0° im Wesentlichen Parallel zum Vereinzelungsorgan umfasst. Zudem können die Winkel jeweils unmittelbar und/oder angrenzend an das Vereinzelungsorgan vorhanden sein und/oder unmittelbar und/oder angrenzend im Bereich der Kammer und/oder im Abgabebereich vorhanden sein.

Es ist möglich, dass eine die zweite Druckluftzufuhr bildende Luftleitung relativ zu den Aussparungen des Vereinzelungsorgans angeordnet sein kann. Insbesondere kann eine Luftleitung relativ zu einer Mittellinie der Aussparungen des Vereinzelungsorgans angeordnet sein, insbesondere in einem Winkel zu einer Mittellinie der Aussparungen. Wobei hierbei zudem vorgesehen sein kann, dass der Winkel in einem Bereich zwischen 0° und 90° liegt.

Es kann vorgesehen sein, dass die, die zweite Druckluftzufuhr bildende Luftleitung in einem Winkel zur Kornleitung angeordnet ist, wobei der Winkel insbesondere in einem Bereich zwischen 90° und 170° liegt. Wobei der Winkel jeweils unmittelbar und/oder angrenzend an das Vereinzelungsorgan und/oder an einem Gehäuse der Vereinzelungsvorrichtung vorhanden sein kann.

Es ist möglich, dass die, die zweite Druckluftzufuhr bildende Luftleitung und die Kornleitung zumindest abschnittsweise durch eine, z. B. durch einen durchgängigen und/oder im Wesentlichen bogenförmig gekrümmten (z. B. im Wesentlichen kontinuierlich gekrümmten) Rohrabschnitt gebildete, Leitung gebildet sind.

Die Leitung, insbesondere der Rohrabschnitt, kann vorzugsweise im Bereich des Einlassbereichs zumindest abschnittsweise z. B. durchgängig und/oder im Wesentlichen bogenförmig gekrümmt sein.

Es ist möglich, dass die Leitung, insbesondere der Rohrabschnitt, zweckmäßig einteilig oder mehrteilig ausgebildet ist.

Vorzugsweise kann die Leitung, insbesondere der Rohrabschnitt den Einlassbereich umfassen.

Es ist möglich, dass die Leitung z. B. einen den Einlassbereich bildenden Ausschnitt (z. B. eine Aussparung oder eine andere geeignete Öffnung) aufweist und/oder vorzugsweise der Ausschnitt zumindest abschnittsweise in der Mantelfläche (z. B. einer Seitenwand) des Rohrabschnitts ausgebildet ist und/oder im Bereich des Vereinzelungsorgans (z. B. im Wesentlichen unmittelbar gegenüber dem Vereinzelungsorgan) angeordnet ist.

Der Rohrabschnitt kann hierbei, zweckmäßig zumindest abschnittsweise, z. B. im Wesentlichen L-förmig oder U-förmig oder V-förmig oder zumindest abschnittsweise im Wesentlichen bogenförmig gekrümmt ausgebildet sein.

Der Einlassbereich der Kornleitung kann zudem durch eine Öffnung in einer Seitenwand der Leitung gebildet sein.

Die Leitung kann zudem derartig zum Vereinzelungsorgan angeordnet sein, dass diese das Vereinzelungsorgan hinter schneidet und/oder dass das Vereinzelungsorgan zumindest abschnittweise eine Seitenwand der Leitung bildet.

Es kann zudem vorgesehen sein, dass der Rohrabschnitt einen im Wesentlichen konstanten Querschnitt, insbesondere Durchlassquerschnitt, aufweist.

Es ist möglich, dass der Rohrabschnitt sich verändernde Querschnitte, insbesondere Durchlassquerschnitte, aufweist, z. B. einen sich im Wesentlichen kontinuierlich verändernden Durchlassquerschnitt.

Es ist möglich, dass die Leitung, insbesondere der Rohrabschnitt, sich vorzugsweise im Wesentlichen unmittelbar und/oder angrenzend an das Vereinzelungsorgan und/oder an einem Gehäuse der Vereinzelungsvorrichtung erstrecken kann, zumindest abschnittsweise.

Es ist möglich, dass der Abschnitt der Leitung, welcher die zweite Druckluftzufuhr ausbildet, und der Abschnitt der Leitung, welcher die Kornleitung ausbildet, in einem Winkel (z. B. zwischen 90° und 170°) zueinander angeordnet sind und/oder dass diese einen zumindest abschnittweise im Wesentlichen bogenförmigen Übergangsbereich aufweisen, wobei der Übergangsbereich sich insbesondere im Bereich des Einlassbereichs befinden kann zweckmäßig zumindest gegenüberliegend zum Einlassbereich. Insbesondere kann zweckmäßig vorgesehen sein, dass sich der Coandä-Effekt gegenüberliegend zum zumindest abschnittweise bogenförmigen Übergangsbereich ausbildet.

Die Leitung und der Rohrabschnitt können vorzugsweise das gleiche Teil sein, so dass vorzugsweise die Offenbarung zur Leitung sinngemäß auch für den Rohrabschnitt gelten kann oder umgekehrt.

In der zweiten Druckluftzufuhr kann zudem ein größerer statischer Druck anliegen und es können geringere Strömungsgeschwindigkeiten einer Luftströmung in dieser vorhanden sein als in einem Abgabebereich und/oder in einer Kornleitung. Insbesondere ist das Druckniveau in der Druckluftzufuhr größer als das Druckniveau bzw. der Atmosphärendruck am Auslassbereich der Kornleitung. Durch die somit sich ergebende Druckdifferenz zwischen der Druckluftzufuhr und der Kornleitung wird eine Luftströmung in der Kornleitung erzeugt, durch welche Luftströmung in der Kornleitung ein Druckluft-beschleunigter Transport der Körner erfolgt. Insbesondere ist die somit in der Kornleitung erzeugte Strömungsgeschwindigkeit der Luftströmung größer als eine Strömungsgeschwindigkeit einer Luftströmung aus der Kammer in Richtung des Abgabebereichs, wodurch keine Luftströmung aus der Kammer in der Kornleitung erzeugt wird.

Insbesondere ist die jeweilige mittels der zweiten Druckluftzufuhr bereitgestellte Druckluft derartig definiert und dimensioniert, dass in dieser Luftströmungen mit einer geringen Strömungsgeschwindigkeit und einem großen statischen Druckniveau vorherrschen bzw. vorhanden sind, wobei dies insbesondere durch große Querschnitte (Strömungsquerschnitte) der zweiten Druckluftzufuhr erfolgen kann, zweckmäßig durch große Querschnitte der zweiten Druckluftzufuhr im Bereich in der diese in den Abgabebereich und/oder in die Kornleitung mündet.

Insbesondere kann die zweite Druckluftzufuhr derartig angeordnet sein, dass eine durch diese erzeugte Strömungsrichtung der mittels dieser zugeführten Luftströmung entgegengesetzt zu einer Luftströmung aus dem Aufnahmebereich in Richtung der Kornleitung orientiert ist, wodurch gegenüber dem Stand der Technik eine nochmals verbesserte Strömungsbarriere erreicht wird.

Insbesondere kann die zweite Druckluftzufuhr derartig angeordnet sein, dass eine durch diese erzeugte Luftströmung eine Gegenströmung zu einer Luftströmung aus der Kammer in Richtung der Kornleitung erzeugt.

Um eine noch bessere Unterbindung einer Luftströmung aus der Kammer durch die Kornleitung zu erzielen, kann zudem vorgesehen sein, dass die Kammer und der Abgabebereich durch eine Trennwand voneinander getrennt werden, insbesondere jedoch zumindest abschnittweise durch eine Trennwand getrennt werden. Die Trennwand kann zudem zumindest abschnittweise den gleichen Verlauf aufweisen wie die Kreisbahn der Aussparungen am Vereinzelungsorgan. Auch kann die Trennwand einen zumindest abschnittweise gleichen Verlauf bzw. parallelen verlauf zur Kornleitung aufweisen.

Die Trennwand kann zudem eine Öffnung zur Durchführung von Körnern aus der Kammer in den Abgabebereich aufweisen.

Die Trennwand kann insbesondere derartig ausgeführt sein, dass keine Körner aus der Kammer ohne Einwirkung des Vereinzelungsorgans in die Kornleitung gelangen können. Zudem kann vorgesehen sein, das die Trennwand derartig ausgeführt ist, dass keine Elemente (z.B. Körner, Schmutzpartikel, oder dergl.) welche den Abgabebereich erreicht haben wieder in die Kammer zurückgeführt werden.

Die erste Druckluftzufuhr und/oder die zweite Druckluftzufuhr können jeweils einen oder mehrere Druckluftanschlüsse in der Kammer und/oder im Abgabebereich und/oder in der Kornleitung aufweisen. Wobei die Druckluftanschlüsse der ersten Druckluftzufuhr und/oder der zweiten Druckluftzufuhr jeweils mit einem gleichen oder unterschiedlichen Druckniveau beaufschlagt werden können und gleiche oder unterschiedliche Querschnitte aufweisen können.

In einer weiteren Ausgestaltung der Vereinzelungsvorrichtung, kann vorgesehen sein, dass das mittels der ersten Druckluftzufuhr und/oder das mittels der zweiten Druckluftzufuhr bereitgestellte Druckniveau und/oder dessen Strömungsquerschnitte (z. B. deren Leitungsquerschnitte) variabel einstellbar und/oder regelbar sind, insbesondere mittels einer Steuerungs- und/oder Regelungseinrichtung variabel einstellbar und/oder regelbar sind. Zur Einstellung und/oder Regelung kann z. B. ein zweckmäßig manuell einstellbares und/oder elektrisch und/oder pneumatisch und/oder hydraulisch betätigbares Ventil, etc. vorgesehen sein. Auch automatisierte Steuerungs- und/oder Regelungseinrichtungen wären denkbar.

Es ist möglich, dass eine manuelle Einstelleinrichtung oder eine zweckmäßig elektrische und/oder pneumatische und/oder hydraulische Steuereinrichtung zur Verfügung gestellt ist, über die die Druckluft aus der ersten Druckluftzufuhr und/oder aus der zweiten Druckluftzufuhr in ihrer Stärke veränderbar ist und/oder aktivierbar oder deaktivierbar ist. Wobei erfindungsgemäß die Stärken jeweils derartig veränderbar und/oder aktivierbar und deaktivierbar sind, dass im Abgabebereich eine Strömungsbarriere erzeugt wird, so dass eine Änderung der mittels der ersten Druckluftzufuhr bereitgestellten Druckluft zumindest weitgehend keine Auswirkung auf die mittels der zweiten Druckluftzufuhr bereitgestellten Druckluft hat und umgekehrt. Insbesondere haben erfindungsgemäß Änderungen der mittels der ersten Druckluftzufuhr bereitgestellten Druckluft keine Auswirkungen auf den Druckluft-beschleunigten Transport der Körner in der Kornleitung.

Es ist möglich, dass ein Druckdrosselabschnitt (z.B. Druckdrosselelement) zur Druckreduzierung vorzugsweise in Drehrichtung des Vereinzelungsorgans vor dem Abgabebereich und/oder vor der Kornleitung angeordnet ist und/oder der Druckdrosselabschnitt z.B. eine Bürstenkonstruktion, eine Schaumstoffkonstruktion und/oder eine Federblechkonstruktion umfasst. Durch einen derartigen Druckdrosselabschnitt kann eine, insbesondere pneumatische Trennung noch weiter verbessert werden und eine Strömungsbarriere noch gezielter erzeugt werden.

Insbesondere kann vorgesehen sein dass die Vereinzelungsvorrichtung eine Trennwand aufweist und der Druckdrosselabschnitt zwischen der Trennwand und dem Gehäuse der Vereinzelungsvorrichtung angebracht ist.

Um eine noch variabler einsetzbare Vereinzelungsvorrichtung zu schaffen, kann zudem in einer Weiterbildung vorgesehen sein, dass die zweite Druckluftzufuhr im Abgabebereich an verschiedenen Positionen montierbar ist. Wobei zur Montage der zweiten Druckluftzufuhr ein Schnellwechselsystem vorgesehen sein kann, z.B. ein Clip-System, ein Rastelement-System, ein Splint-System oder ein Steck-System.

In einer Ausführungsvariante kann zudem vorgesehen sein, dass die Vereinzelungsvorrichtung einen Separierungsbereich umfasst, welcher Separierungsbereich insbesondere der Kammer zugeordnet, insbesondere räumlich zugeordnet, sein kann. Der Separierungsbereich umfasst zumindest eine Separiereinrichtung (z. B. ein oder mehrere Separierelemente) zum Entfernen überschüssiger Körner von den Aussparungen, des Vereinzelungsorgan. Wobei der Separierungsbereich insbesondere derartig angeordnet ist, dass durch den Separierungsbereich vom Vereinzelungsorgan gelöste Körner wieder in die Kammer zurückgeführt werden und den Abgabebereich bzw. die Kornleitung nicht erreichen können, wobei dies wiederum durch eine entsprechende Anordnung einer Trennwand zwischen der Kammer und dem Abgabebereich noch weiter verbessert werden kann.

Die Separiereinrichtung kann z. B. einen oder mehrere Abstreifer, z.B. zumindest eine Leitkante, zumindest einen Steg, zumindest ein Blech oder zumindest eine Rolle, zur mechanischen Entfernung überschüssiger Körner aufweisen, oder eine oder mehrere Bürsten zur mechanischen Entfernung überschüssiger Körner aufweisen oder eine oder mehrere Düsen zur pneumatischen Entfernung überschüssiger Körner aufweisen.

Im Abgabebereich können die Körner zudem eine Richtungsänderung erfahren, bspw. aus einer zunächst kreisförmigen Bewegung entlang der Kreisbahn der Aussparungen des Vereinzelungsorgan in eine zumindest abschnittweise Lineare Bewegungsrichtung entlang der Kornleitung. Wobei die Kornleitung hierbei in einem Winkel zu einer Tangentialen zur Kreisbahn der Aussparungen des Vereinzelungsorgans angeordnet sein kann der größer oder gleich zu 0° ist und kleiner oder gleich zu 30° ist. Insbesondere jedoch 0° beträgt.

Die Kornleitung kann zumindest abschnittweise in einem Winkel zur durch das Vereinzelungsorgan gebildeten Wand angebracht sein. Wobei der Winkel größer oder gleich 0° ist und kleiner oder gleich 30° ist. Insbesondere jedoch 0° betragen kann.

Die erste Druckluftzufuhr und die zweite Druckluftzufuhr können an einer gemeinsamen Druckluftquelle angeschlossen sein und/oder an verschiedenen Druckluftquellen angeschlossen sein. Bei der Ausführungsform mit verschiedenen und somit mehreren Druckluftquellen kann die jeweilige Druckluftzufuhr folglich über eine eigene, separate Druckluftquelle mit Druckluft versorgt werden. Wobei die erste Druckluftzufuhr und die zweite Druckluftzufuhr jeweils derartig erfolgen, dass mittels der ersten Druckluftzufuhr ein Druckluft-beschleunigter Transport der Körner in der Kornleitung nicht beeinflusst wird, sowie das mittels der zweiten Druckluftzufuhr eine Erzeugung einer Druckdifferenz am Vereinzelungsorgan in der Kammer nicht beeinflusst wird.

In einer Weiterbildung der Erfindung ist es zudem möglich, dass der Kammer und/oder dem Abgabebereich und/oder der ersten Druckluftzufuhr und/oder der zweiten Druckluftzufuhr Messmittel zur Erfassung des Druckniveaus und/oder zur Erfassung der Strömungsgeschwindigkeit der Luftströmung und/oder des Totaldruck zugeordnet sind. Wobei wiederum vorgesehen sein kann, dass die jeweiligen Druckniveaus und/oder die Strömungsgeschwindigkeiten und/oder der Totaldruck jeweils in Abhängigkeit der mittels der Messmittels erfassten Werte variiert wird.

Es ist möglich, dass die Berechnung bzw. die Ermittlung des Totaldrucks mittels eines, in einer Rechnereinheit hinterlegten Steuerungsprogramms erfolgt. Welche Rechnereinheit wiederum mittels einer Steuer- und/oder Regeleinrichtung wirkverbunden sein kann.

Es ist möglich, dass eine Steuereinrichtung die mittels der ersten Druckluftzufuhr und/oder die mittels der zweiten Druckluftzufuhr bereitgestellten Druckniveaus und/oder Strömungsgeschwindigkeiten einer Luftströmung in Abhängigkeit von einer z. B. im Betrieb der Vereinzelungsvorrichtung erfassten Vereinzelungs- und/oder Ablagequalität der Körner steuert (z. B. Abstandsgenauigkeit bzw. Variationskoeffizient, etc.). Alternativ oder ergänzend kann die Steuereinrichtung die Druckniveaus und/oder Strömungsgeschwindigkeiten z. B. in Abhängigkeit von insbesondere im Betrieb der Vereinzelungsvorrichtung erfassten Bodenkennwerten (z.B. Furchenverlauf, Boden-Topographie, Bodenfeuchtigkeit, etc.) steuern. Die Erfassung kann hierbei z. B. mittels einer oder mehreren Sensoren, Kameras und/oder Lasern, etc. erfolgen.

Die Steuereinrichtung kann in einer Ausführungsform der Erfindung zweckmäßig z. B. auch eine Regelungseinrichtung sein, so dass die hierin erwähnte "Steuerung" in einer Ausführungsform der Erfindung zweckmäßig auch eine "Regelung" umfassen kann.

Wenn zuvor die Erfindungsgemäße Vereinzelungsvorrichtung beschrieben wurde, so sei an dieser Stelle ausdrücklich betont, dass alle Aspekte und Ausführungsvarianten, die im Zusammenhang mit der Vereinzelungsvorrichtung erläutert wurden, gleichermaßen Teilaspekte des nachfolgenden erfindungsgemäßen Verfahren sowie der nachfolgenden erfindungsgemäßen Reiheneinheit betreffen oder sein können. Wenn daher an einer Stelle bei der Beschreibung oder auch bei den Anspruchsdefinitionen von der erfindungsgemäßen Vereinzelungsvorrichtung die Rede ist, so gilt dies gleichermaßen für das erfindungsgemäße Verfahren sowie die erfindungsgemäße Reiheneinheit. In umgekehrter Weise gilt dasselbe, so dass auch alle Aspekte die im Zusammenhang mit dem erfindungsgemäßen Verfahren erläutert werden oder die im Zusammenhang mit der erfindungsgemäßen Reiheneinheit erläutert werden, gleichermaßen Teilaspekte der Vereinzelungsvorrichtung sein können.

Zur Lösung der Aufgaben schlägt die Erfindung zudem ein Verfahren zur Vereinzelung von Körner, insbesondere zur Druckdifferenz-basierten Vereinzelung von Körner vor. Wobei das Verfahren zunächst die Schritte umfasst:

- Vorzugsweise die Bereitstellung und Aufnahme von Körner z. B. mittels einer Kammer,
- Den Transport der Körner von der Kammer zu einem Abgabebereich mittels eines drehbarem Vereinzelungsorgan, wobei die Kammer zumindest in eine Richtung durch eine durch das Vereinzelungsorgan gebildete Wand begrenzt ist,
- Die Erzeugung zumindest einer Druckdifferenz in der Kammer mittels einer ersten Druckluftzufuhr, welche in der Kammer mündet, wobei das Vereinzelungsorgan eine Vielzahl an Aussparungen für die Körner aufweist und die Körner durch die durch die erste Druckluftzufuhr bereitgestellte Druckluft, Druckdifferenz-basiert in den Aussparungen haltbar sind,

- Die Abgabe vereinzelter Körner in eine Kornleitung, zum Verteilen vereinzelter Körner auf oder in einem Ackerboden,
- Die Vereinzelung wird mit einer erfindungsgemäßen Vereinzelungsvorrichtung ausgeführt.

Um ein Verfahren zur Verfügung zu stellen, mittels welchem eine für unterschiedliche Kornsorten und/oder für unterschiedliche Bodenverhältnisse universell einsetzbare Vereinzelung von Körnern erfolgt sieht das Verfahren zudem eine Unterbindung einer Luftströmung aus der Kammer in die Kornleitung und einen Druckluft-beschleunigten Transport der Körner durch die Kornleitung mittels der durch die zweite Druckluftzufuhr bereitgestellten Druckluft vor.

In einer weiteren Ausführungsvariante des Verfahren kann vorgesehen sein, dass das mittels der ersten Druckluftzufuhr und/oder das mittels der zweiten Druckluftzufuhr bereitgestellte Druckniveau und/oder dessen Strömungsquerschnitte (z. B. deren Leitungsquerschnitte) variabel einstellbar und/oder regelbar sind, insbesondere mittels einer Steuerungs- und/oder Regelungseinrichtung variabel einstellbar und/oder regelbar sind. Zur Einstellung und/oder Regelung kann z. B. ein zweckmäßig manuell einstellbares und/oder elektrisch und/oder pneumatisch und/oder hydraulisch betätigbares Ventil, etc. vorgesehen sein. Auch automatisierte Steuerungs- und/oder Regelungseinrichtungen wären denkbar.

Die Erfindung umfasst zudem eine landwirtschaftliche Reiheneinheit mit zumindest einer Vereinzelungsvorrichtung wie hierin offenbart. Wobei zumindest zwei derartige Reiheneinheiten insbesondere an einer Trägerkonstruktion einer landwirtschaftlichen Maschine montierbar sind. Die Reiheneinheiten können hierbei z.B. an die Trägerkonstruktion beweglich montierbar ausgebildet sein, z. B. über eine ParallelogrammAnordnung.

Die Reiheneinheit kann z. B. zumindest ein Saatfurchenerzeugendes-Werkzeug und vorzugsweise ein Saatfurchenschließendes-Werkzeug umfassen. Auch diverse andere Werkzeuge können zudem vorgesehen sein und schwenkbar und/oder drehend und/oder fest mit der Rahmenkonstruktion verbunden sein.

Die Reiheneinheit kann z.B. auch ein Fangelement (z.B. eine Fangrolle oder einen Seed-Firmer) umfassen, wobei Körner mittels der durch die zweite Druckluftzufuhr bereitgestellten Druckluft z. B. im Wesentlichen tangential gegen das Fangelement geschossen werden können.

Um eine für unterschiedliche Bodenverhältnisse einsetzbare Reiheneinheit zu schaffen, ist es möglich, dass das Fangelement über ein Schnellwechselsystem (z. B. ein Clip-System, ein Rastelement-System, ein Splint-System oder ein Steck-System) an der Reiheneinheit montierbar ist und/oder ausgeführt ist, um mittels einer Vorspannung (z. B. federbelastet) gegen den Ackerboden (z.B. eine Saatfurche) gedrückt zu werden, wobei die Vorspannung vorzugsweise in ihrer Stärke einstellbar sein kann.

An der Reiheneinheit wird insbesondere eine Vereinzelungsvorrichtung wie hierin offenbart montiert, wobei die Reiheneinheit hierfür eine, die Komponenten der Reiheneinheit tragenden Rahmenkonstruktion aufweisen sein kann, insbesondere ist die Vereinzelungsvorrichtung fest mit einer die Komponenten der Reiheneinheit tragenden Rahmenkonstruktion verbunden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:

Figur 1      eine Perspektivansicht einer landwirtschaftlichen Maschine mit einer Mehrzahl von Reiheneinheiten mit Vereinzelungsvorrichtung,

Figur 2      eine Seitenansicht einer Reiheneinheit mit einer Vereinzelungsvorrichtung sowie mit einer Kornleitung und einem Fangelement,

Figur 3A      eine schematische Seitenansicht im Schnitt einer Vereinzelungsvorrichtung mit einer ersten Druckluftzufuhr und einer zweiten Druckluftzufuhr, wobei die zweite Druckluftzufuhr eine die Kornleitung umgebende Luftleitung ist,

Figur 3B      eine Vorderansicht im Schnitt einer Vereinzelungsvorrichtung gemäß der Figur 3A,

Figur 4A      eine schematische Seitenansicht im Schnitt einer Vereinzelungsvorrichtung mit einer ersten Druckluftzufuhr und einer zweiten Druckluftzufuhr, wobei die zweite Druckluftzufuhr quer zum Abgabebereich angeordnet ist und

Figur 4B      eine Vorderansicht im Schnitt einer Vereinzelungsvorrichtung gemäß der Figur 4A.

Figur 5      eine Seitenansicht im Schnitt einer Vereinzelungsvorrichtung mit einer relativ zum Vereinzelungsorgan angeordneten zweiten Druckluftzufuhr.

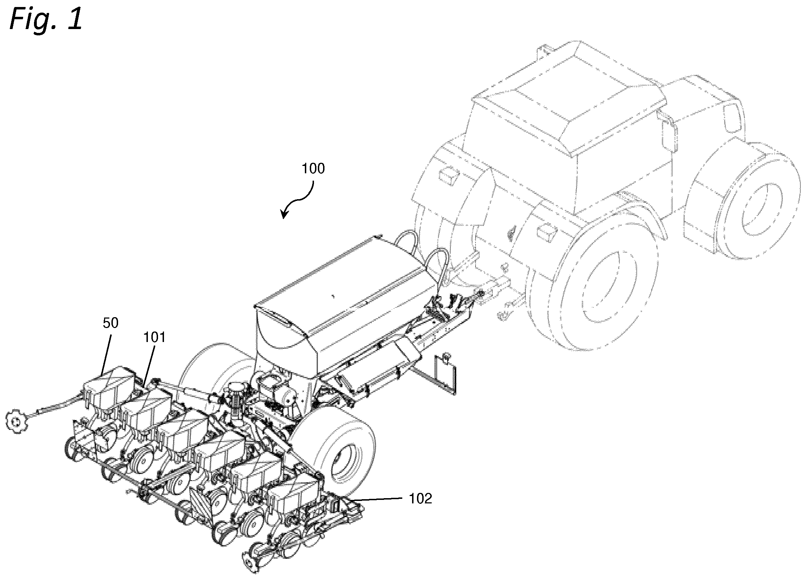

Die in den Figuren 1 bis 5 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße Vereinzelungsvorrichtung, das erfindungsgemäße Verfahren sowie die erfindungsgemäße Reiheneinheit ausgestaltet und ausgeführt sein können und stellen keine abschließende Begrenzung dar.

Ein Ausführungsbeispiel einer landwirtschaftlichen Maschine 100 mit einer Mehrzahl von in Abständen zueinander angeordneten Reiheneinheiten 50 geht aus der Perspektivansicht der Figur 1 hervor. An den Reiheneinheiten 50 sind jeweils erfindungsgemäße Vereinzelungsvorrichtungen 10 angebracht. Die landwirtschaftliche Maschine 100 wird mit einem Zugfahrzeug entlang einer Ackerfläche bewegt und dient zur vereinzelten bzw. vergleichmäßigten Abgabe von Körnern (z.B. Saatgut, Dünger, etc.). Die landwirtschaftliche Maschine 100 umfasst eine Trägerkonstruktion. An der Trägerkonstruktion ist eine Mehrzahl von Reiheneinheiten 50 mit jeweils einer Vereinzelungsvorrichtung 10 montiert, zweckmäßig schwenkbar und/oder beweglich, z.B. über eine Parallelogramm-Einrichtung. Die Trägerkonstruktion umfasst insbesondere zwei verschwenkbare Träger 101 und 102 zur Breitenreduzierung der Trägerkonstruktion.

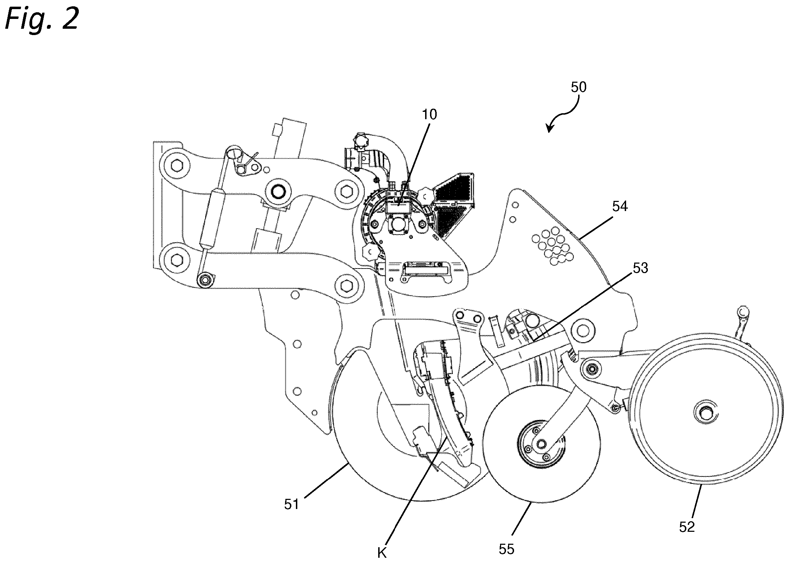

Weitere Details einer Ausführungsvariante einer Reiheneinheit 50 gehen aus der Seitenansicht der Figur 2 hervor. Die Reiheneinheit 50 umfasst ein Saatfurchenerzeugendes-Werkzeug 51 (z.B. Schneidscheibe und/oder zwei in einem Winkel zueinander angeordnete Schneidscheiben) und ein Saatfurchenschließendes-Werkzeug 52 (z.B. Druckrolle und/oder zwei in einem Winkel zueinander angeordnete Druckrollen oder Fingerrollen oder dergl.). Zur Variation der jeweiligen Tiefe der erzeugten Saatfurche umfasst die Reiheneinheit 50 zudem ein in dessen Höhe verstellbares Tiefenführungselement 53.

Zur Vereinzelung bzw. zur Vergleichmäßigung der jeweiligen Körner ist der Reiheneinheit 50 räumlich eine Vereinzelungsvorrichtung 10 zugeordnet. Insbesondere ist die Vereinzelungsvorrichtung fest mit einer die Komponenten der Reiheneinheit 50 tragenden Rahmenkonstruktion 54 verbunden.

An die Vereinzelungsvorrichtung 10 schließt eine Kornleitung K an, mittels welcher Körner aus der Vereinzelungsvorrichtung 10 in Richtung einer mittels der Saatfurchenerzeugenden-Werkzeuge 51 erzeugten Saatfurche, insbesondere Druckluft-beschleunigt transportiert werden.

Die Reiheneinheit 50 umfasst zudem ein Fangelement 55, gemäß der Figur 2 in Form einer Fangrolle, wobei die Körner Druckluft-beschleunigt z.B. im Wesentlichen tangential gegen das Fangelement geschossen werden können. Das Fangelement 55 kann über ein Schnellwechselsystem (z. B. ein Clip-System, ein Rastelement-System, ein Splint-System oder ein Steck-System) an der Reiheneinheit 50 montiert sein. Zudem kann vorgesehen sein, dass das Fangelement 55 derartig ausgeführt ist, um mittels einer Vorspannung (z. B. federbelastet) gegen den Ackerboden (z.B. eine Saatfurche) gedrückt zu werden, wobei die Vorspannung zweckmäßig in ihrer Stärke einstellbar sein kann.

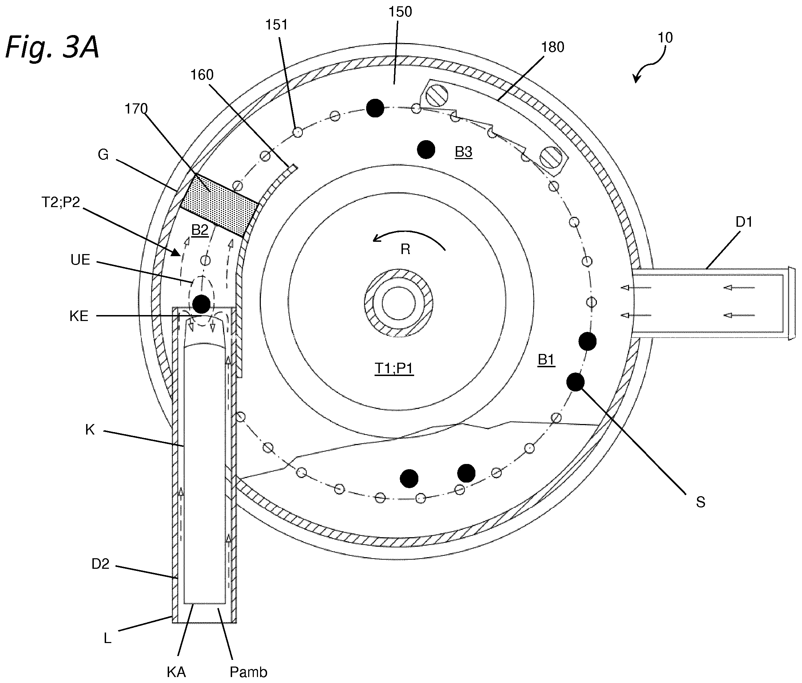

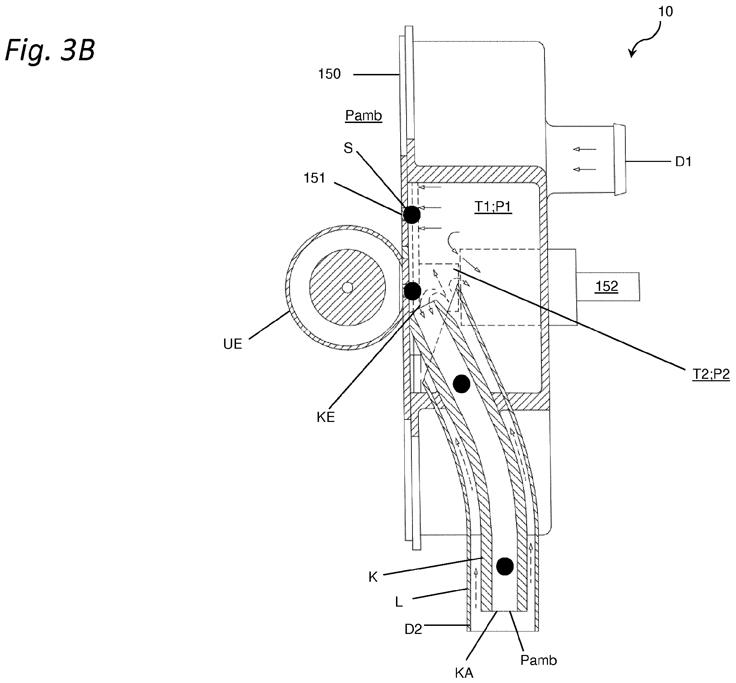

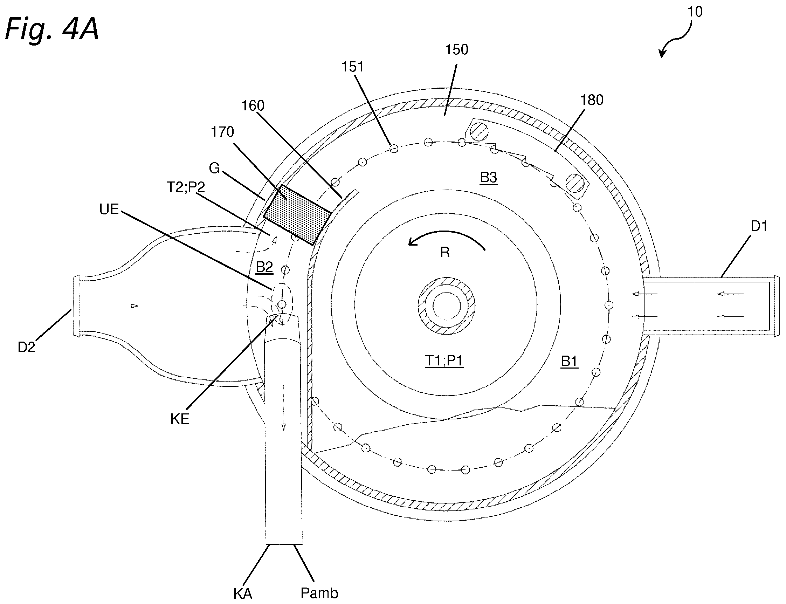

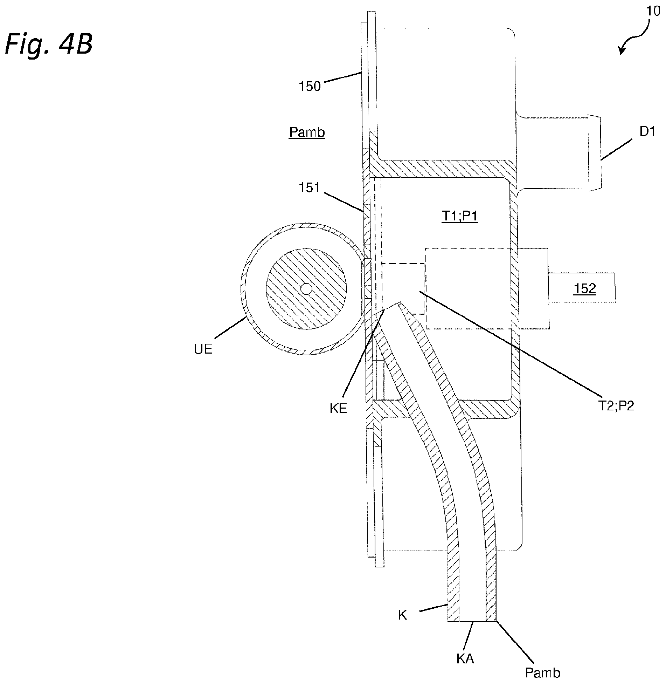

Weitere Details möglicher Ausführungsvarianten erfindungsgemäßer Vereinzelungsvorrichtungen 10 gehen aus den Figuren 3 & 4 hervor.

Die Vereinzelungsvorrichtung 10 umfasst eine Kammer B1 zur Aufnahme der auszubringenden Körner S, sowie ein drehbares Vereinzelungsorgan 150, wobei die Kammer B1 zumindest in eine Richtung durch eine, durch das Vereinzelungsorgan 150 gebildete Wand begrenzt ist. Mittels des Vereinzelungsorgans 150 werden jeweils Körner S aus der Kammer B1 zu einem Abgabebereich B2 transportiert. Zur Erzeugung der Drehung des Vereinzelungsorgans 150 kann zudem ein motorischer Antrieb 152 vorgesehen sein.

Die Vereinzelungsvorrichtung 10 umfasst zudem eine erste Druckluftzufuhr D1, welche in die Kammer B1 mündet und mittels der, der Kammer B1 Druckluft zur Erzeugung zumindest einer Druckdifferenz zuführbar ist.

Das Vereinzelungsorgan 150 umfasst zudem eine Vielzahl von, in regelmäßigen Abständen entlang einer Kreisbahn angeordneten, Aussparungen 151 für die Körner S, wobei die Körner S durch die durch die erste Druckluftzufuhr D1 bereitgestellte Druckluft, Druckdifferenz-basiert in den Aussparungen 151 haltbar sind.

Es sei noch darauf hingewiesen, dass die in den Figuren 3 dargestellten Körner S nicht an allen, im Betrieb vorhandenen Stellen dargestellt sind. So sind bspw. gemäß der Figur 3A Körner S nur an einigen Aussparungen 151, wohingegen im Betrieb der Vereinzelungsvorrichtungen 10 an allen Aussparungen 151 Körner S vorhanden sein können bzw. vorhanden sind.

Des Weiteren umfassen die Ausführungsbeispiele der Vereinzelungsvorrichtungen 10 einen Abgabebereich B2, zur Abgabe vereinzelter Körner S vom Vereinzelungsorgan 150 in eine Kornleitung K. Wobei die Körner S insbesondere Druckluft-beschleunigt durch die Kornleitung K transportiert werden und anschließend auf oder in einem Ackerboden verteilt werden.

So sieht die Erfindung jeweils eine erste, mittels der ersten Druckluftzufuhr D1 bereitgestellte Druckluft vor (siehe Figuren 3 & 4 durchgängige Linien). Des Weiteren sieht die Erfindung jeweils eine zweite, mittels der zweiten Druckluftzufuhr D2 bereitgestellte Druckluft vor (siehe Figuren 3 & 4 gestrichelte Linien). Wobei die zweite Druckluftzufuhr D2 zur Unterbindung einer Luftströmung aus der Kammer B1 in die Kornleitung K und zum Druckluft-beschleunigten Transport der Körner S durch die Kornleitung K dient.

Wobei die somit jeweils bereitgestellte Druckluft, das heißt deren Druckniveau und deren Strömungsgeschwindigkeiten der Luftströme jeweils derartig definiert und dimensioniert sind, dass keine Luftströmung aus dem Aufnahmebereich B1 in die Kornleitung K erzeugt wird, sondern dass die Luftströmung in der Kornleitung K durch die mittels der zweiten Druckluftzufuhr D2 bereitgestellte Druckluft erfolgt.

Gemäß der Figuren 3 & 4 sind zur Veranschaulichung dieser zusammenhänge die jeweiligen Linien mit verschiedenen Längen und Richtungen dargestellt, wobei hierbei gilt desto Länger die Linie desto größer die Strömungsgeschwindigkeit und umgekehrt.

Zur Erzeugung eines Druckluft-beschleunigten Transports der Körner S durch die Kornleitung K umfasst die Vereinzelungsvorrichtung 10 zudem eine zweite Druckluftzufuhr D2, welche im Abgabebereich und/oder zumindest abschnittweise in der Kornleitung K mündet.

Wobei gemäß der Figuren 3 die zweite Druckluftzufuhr D2 durch eine Luftleitung L gebildet wird, welche die Kornleitung K zumindest abschnittweise umgibt, wobei die Luftleitung L hierfür einen größeren Innendurchmesser bzw. Innenquerschnitt aufweist als die Kornleitung K einen Außendurchmesser bzw. Außenquerschnitt aufweist, durch den somit sich ergebenden Spalt kann somit die zweite Druckluftzufuhr D2 erfolgen. Die Luftleitung L kann zudem bündig mit der Kornleitung K abschließen oder kürzer sein als die Kornleitung K.

In der Luftleitung L kann zudem ein größerer statischer Druck anliegen und es können geringere Strömungsgeschwindigkeiten einer Luftströmung in dieser vorhanden sein als in einem Abgabebereich B2 und/oder in einer Kornleitung K. Insbesondere ist das Druckniveau in der Luftleitung L größer als das Druckniveau bzw. der Atmosphärendruck $P_{amb}$ am Auslassbereich KA der Kornleitung. Durch die somit sich ergebende Druckdifferenz zwischen der Luftleitung L und der Kornleitung K wird eine Luftströmung in der Kornleitung K erzeugt, durch welche Luftströmung in der Kornleitung K ein Druckluft-beschleunigter Transport der Körner S durch die Kornleitung K erzeugt wird. Insbesondere ist die somit in der Kornleitung K erzeugte Strömungsgeschwindigkeit der Luftströmung größer als eine Strömungsgeschwindigkeit einer Luftströmung aus der Kammer B1 in Richtung des Abgabebereichs B2, wodurch keine Luftströmung aus der Kammer B1 in der Kornleitung K erzeugt wird.

Zur Versorgung der Luftleitung L mit der entsprechenden Druckluft, kann diese mit einer Druckluftquelle verbunden sein. Wobei die Luftleitung L hierfür einen zusätzlichen Anschluss aufweisen kann und mit einer, hier nicht dargestellte Druckluftquelle (z.B. Gebläse, insbesondere Überdruckgebläse) in Verbindung stehen kann.

Gemäß der Figuren 4 kann die zweite Druckluftzufuhr D2 quer zum Abgabebereich B2 angebracht sein kann. Wobei die Druckluftzufuhr D2 auch hierbei mit einer Druckluftquelle in Verbindung stehen kann. In der zweiten Druckluftzufuhr D2 kann zudem ein größerer statischer Druck anliegen und es können geringere Strömungsgeschwindigkeiten einer Luftströmung in dieser vorhanden sein als in einem Abgabebereich B2 und/oder in einer Kornleitung K. Insbesondere ist das Druckniveau in der zweiten Druckluftzufuhr D2 größer als das Druckniveau bzw. der Atmosphärendruck $P_{amb}$ am Auslassbereich KA der Kornleitung K. Durch die somit sich ergebende Druckdifferenz zwischen der zweiten Druckluftzufuhr D2 und der Kornleitung K wird eine Luftströmung in der Kornleitung K erzeugt, durch welche Luftströmung in der Kornleitung ein Druckluft-beschleunigter Transport der Körner S durch die Kornleitung K erzeugt wird. Insbesondere ist die somit in der Kornleitung K erzeugte Strömungsgeschwindigkeit der Luftströmung größer als eine Strömungsgeschwindigkeit einer Luftströmung aus der Kammer B1 in Richtung des Abgabebereichs B2, wodurch keine Luftströmung aus der Kammer B1 in der Kornleitung K erzeugt wird.

Erfindungsgemäß ist Vorgesehen, dass die mittels der zweiten Druckluftzufuhr D2 bereitgestellte Druckluft derartig definiert und dimensioniert ist, dass eine Unterbindung einer Luftströmung aus der Kammer B1 durch die Kornleitung K erfolgt.

Insbesondere ist die jeweilige mittels der zweiten Druckluftzufuhr D2 bereitgestellte Druckluft derartig definiert und dimensioniert dass in dieser geringe Strömungsgeschwindigkeiten einer Luftströmung und große statische Druckniveaus vorherrschen, wobei dies bspw. durch einen Großen Querschnitt (z.B. Strömungsquerschnitt bzw. Leitungsquerschnitt) der zweiten Druckluftzufuhr D2 erfolgen kann.

Um die Körner S aus der Kammer B1 in den Abgabebereich B2 zu fördern ist das Vereinzelungsorgan 150, mittels eines motorischen Antriebs 152 drehend, insbesondere mit variabel veränderbaren Drehgeschwindigkeiten, angetrieben.

Um eine noch bessere Unterbindung der Luftströmung aus der Kammer B1 zur Kornleitung K zu erzielen ist zudem eine Trennwand 160 vorgesehen, welche somit zusammen mit einem Gehäuse bzw. mit einem Gehäuseteil der Vereinzelungsvorrichtung G den Abgabebereich B2 ausbildet. Somit kann eine insbesondere pneumatische Trennung zwischen der Kammer B1 und dem Abgabebereich B2 noch weiter verbessert werden.

Die mittels der zweiten Druckluftzufuhr D2 bereitgestellte Druckluft bildet insbesondere eine Strömungsbarriere 170 bzw. eine Luftbarriere für die in der Kammer B1 durch die erste Druckluftzufuhr D1 bereitgestellte Druckluft, wobei diese Strömungsbarriere 170 gemäß der Figuren 3A & 4A sich vor dem Bereich, der Kornabgabe vom Vereinzelungsorgan 150 in die Kornleitung K ausbilden kann.

Die Vereinzelungsvorrichtungen 10 sind jeweils derartig ausgeführt dass die Druckluft in der Kammer B1 und im Abgabebereich B2 jeweils zumindest weitgehend unabhängig voneinander Veränderbar sind, wobei dies dadurch erreicht wird, dass der sich im Abgabebereich einstellende Totaldruck T2 größer oder gleich zum sich einstellenden Totaldruck T1 in der Kammer ist.

Mittels der ersten Druckluftzufuhr D1 wird in der Kammer B1 ein Druckniveau P1 erzeugt. Zudem ist vorgesehen, dass mittels der zweiten Druckluftzufuhr D2 im Abgabebereich B2 ein Druckniveau P2 erzeugt wird. Um eine Strömungsbarriere 170 zwischen der Kammer B1 und der Kornleitung K zu schaffen kann vorgesehen sein, dass das Druckniveau P1 kleiner oder gleich zum Druckniveau P2 ist, insbesondere jedoch dauerhaft größer ist und/oder dass die Querschnitte der ersten Druckluftzufuhr D1 und der zweiten Druckluftzufuhr D2 derartig dimensioniert sind, dass die Strömungsgeschwindigkeiten der Luftströme im Abgabebereich B2 größer als in der Kammer B1 ist.

Die Kornleitung K umfasst einen Einlassbereich KE, welcher an den Abgabebereich B2 anschließt und einen Auslassbereich KA welcher im Betrieb der Vereinzelungsvorrichtung 10 in der Nähe und/oder in einer Saatfurche bzw. im Ackerboden angeordnet ist, bzw. läuft, wobei dem Auslassbereich KA zudem ein Fangelement 55 nachgeordnet sein kann (siehe. Figur 2). Der Verlauf der Kornleitung K zwischen dem Einlassbereich KE und dem Auslassbereich KA kann zumindest abschnittweise bogenförmig und/oder geradlinig sein (siehe Figur 2).

Am Auslassbereich KA der Kornleitung K liegt im Betrieb der Vereinzelungsvorrichtung 10 der Atmosphärendruck $P_{amb}$ an, d.h. der Überdruck beträgt hier 0 bar. Zudem herrscht auf einer gegenüberliegenden Seite der Körner S, am Vereinzelungsorgan 150 ein geringeres Druckniveau als auf der Seite der Körner S, insbesondere wiederum der Atmosphärendruck $P_{amb}$, wodurch an den Aussparungen 151 des Vereinzelungsorgan 150 eine entsprechende Druckdifferenz (und/oder Strömung quer zum Vereinzelungsorgan 150, siehe Figur 3B) erzeugt wird, durch welche Druckdifferenz Körner S an den Aussparungen 151 gehalten werden.

Zur Unterbrechung der Druckdifferenz an den Aussparungen 151 des Vereinzelungsorgan 150 kann der Vereinzelungsvorrichtung 10 bzw. dem Vereinzelungsorgan 150 auf der gegenüberliegenden Seite der Körner S im Abgabebereich B2 ein Druckdifferenz-Unterbrechungselement UE, gemäß der Figuren 3 & 4 in Form einer Rolle zugeordnet sein. Wobei es zudem möglich ist, dass das Druckdifferenz-Unterbrechungselement UE zumindest abschnittweise gegenüber eines Abschnitts einer sich zwischen dem Abgabebereich B2 und den Aufnahmebereich B1 einstellenden Strömungsbarriere angeordnet ist.

Die Vereinzelungsvorrichtungen 10 umfassten zudem einen Separierungsbereich B3, welcher Separierungsbereich B3 vorzugsweise der Kammer B1 räumlich zugeordnet ist. Der Separierungsbereich B3 umfasst zumindest eine Separiereinrichtung 180 zum Entfernen überschüssiger Körner S von den Aussparungen 151, des Vereinzelungsorgan 150. Wobei der Separierungsbereich B3 derartig angeordnet ist, dass durch den Separierungsbereich B3 vom Vereinzelungsorgan 150 gelöste Körner S wieder in den Aufnahmebereich B1 zurückgeführt werden und den Abgabebereich B2 nicht erreichen (siehe Figur 3A).

Die Separiereinrichtung 180 kann gemäß der Figuren 3 & 4 einen oder mehrere Abstreifer, z.B. zumindest eine Leitkante, zumindest einen Steg, zumindest ein Blech oder zumindest eine Rolle, zur mechanischen Entfernung überschüssiger Körner S umfassen, denkbar wären jedoch auch eine oder mehrere Bürsten zur mechanischen Entfernung überschüssiger Körner S oder eine oder mehrere Düsen zur pneumatischen Entfernung überschüssiger Körner S.

Die erste Druckluftzufuhr D1 und die zweite Druckluftzufuhr D2 können an einer gemeinsamen Druckluftquelle angeschlossen sein und/oder an verschiedenen Druckluftquellen angeschlossen sein. Bei der Ausführungsform mit verschiedenen und somit mehreren Druckluftquellen kann die jeweilige Druckluftzufuhr folglich über eine eigene, separate Druckluftquelle mit Druckluft versorgt werden.

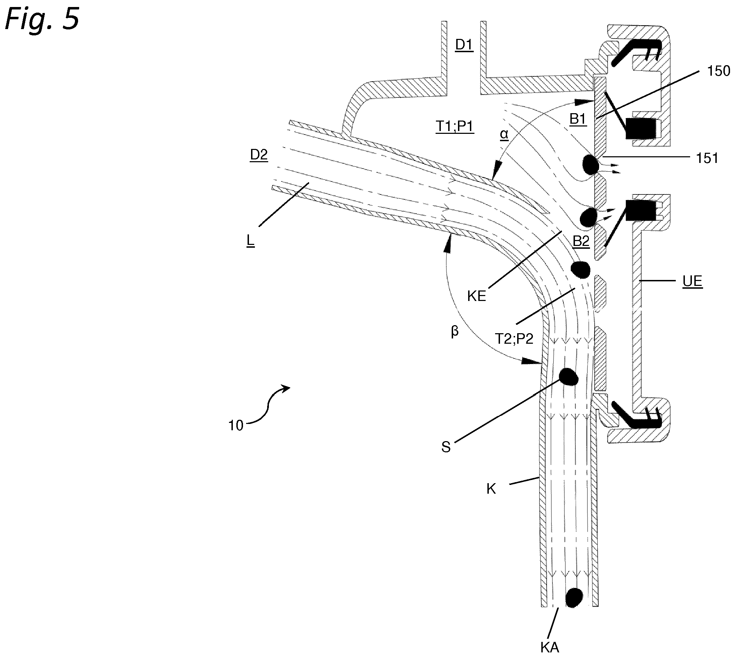

Eine weitere Ausführungsvariante einer erfindungsgemäßen Vereinzelungsvorrichtung 10 geht aus der Seitenansicht im Schnitt der Figur 5 hervor. Die zweite Druckluftzufuhr D2 ist hierbei quer zum Vereinzelungsorgan 150 angebracht, insbesondere ist eine die zweite Druckluftzufuhr D2 bildende Luftleitung L relativ zum Vereinzelungsorgan 150 angeordnet, zweckmäßig in einem Winkel α zum Vereinzelungsorgan 150. Erfindungsgemäß kann hierbei vorgesehen sein, dass der Winkel α in einem Bereich zwischen 0° und 90° liegt und/oder in einem Bereich zwischen 45° und 80° liegt, wobei der Winkel α gemäß der Figur 5 im Wesentlichen 75° beträgt. Zudem ist der Winkel α hierbei unmittelbar und/oder angrenzend an das Vereinzelungsorgan 150 vorhanden.

Gemäß dem Ausführungsbeispiel der Figur 5 ist zudem vorgesehen, dass die, die zweite Druckluftzufuhr D2 bildende Luftleitung L in einem Winkel β zur Kornleitung angeordnet ist, wobei der Winkel β insbesondere in einem Bereich zwischen 90° und 170° liegt und gemäß der Figur 5 im Wesentlichen 105° beträgt. Zudem der Winkel β hierbei unmittelbar und/oder angrenzend an das Vereinzelungsorgan 150 vorhanden.

Die, die zweite Druckluftzufuhr D2 bildende Luftleitung L und die Kornleitung K sind durch eine, durch einen durchgängigen Rohrabschnitt gebildete, Leitung gebildet, wobei die Leitung im Bereich des Vereinzelungsorgan 150 einen, den Einlassbereich KE bildenden Ausschnitt aufweist. Der Rohrabschnitt ist hierbei im Wesentlichen L-förmig er könnte jedoch auch U-förmig oder V-förmig sein. Der Einlassbereich KE der Kornleitung K kann zudem durch eine Öffnung in einer Seitenwand der Leitung gebildet sein. Die Leitung ist zudem derartig zum Vereinzelungsorgan 150 angeordnet, dass diese das Vereinzelungsorgan 150 hinter schneidet und/oder dass das Vereinzelungsorgan 150 zumindest abschnittweise ein Seitenwand der Leitung bildet. Es kann zudem vorgesehen sein, dass der Rohrabschnitt einen konstanten Querschnitt aufweist und/oder sich verändernde Querschnitte (siehe Figur 5) aufweist.

Der Abschnitt der Leitung welcher die zweite Druckluftzufuhr D2 ausbildet und der Abschnitt der Leitung welche die Kornleitung K sind in einem Winkel β zueinander angeordnet und weisen einen zumindest abschnittweise bogenförmigen Übergangsbereich auf, wobei der Übergangsbereich sich insbesondere im Bereich des Einlassbereichs KE befinden kann, zweckmäßig zumindest gegenüberliegend zum Einlassbereich KE. Insbesondere kann zweckmäßig vorgesehen sein, dass sich ein Coandä-Effekt gegenüberliegend zum zumindest abschnittweise bogenförmigen Übergangsbereich ausbildet.

Gemäß dem Ausführungsbeispiel der Figur 5 ist vorgesehen, dass die erste Druckluftzufuhr D1 und die zweite Druckluftzufuhr D2 derartig zueinander angeordnet sind, dass sich zwischen diesen der Coandä-Effekt ausbildet, d.h. die mittels der ersten Druckluftzufuhr D1 erzeugte Luftströmung wirkt derartig auf die mittels der zweiten Druckluftzufuhr D2 erzeugte Luftströmung ein, dass diese in Richtung der Kornleitung K umgelenkt wird, ohne dass jedoch die mittels der ersten Druckluftzufuhr D2 erzeugte Luftströmung ebenfalls in die Kornleitung K gelangen kann, vergl. Strömungslinien der Figur 5.

Zweckmäßig kann insbesondere vorgesehen sein, dass die erste Druckluftzufuhr D1 und die zweite Druckluftzufuhr D2 derartig zueinander angeordnet und/oder dimensioniert sind, dass im Einlassbereich KE die von der zweiten Druckluftzufuhr D2 bereitgestellte Luftströmung aufgrund eines sich einstellenden Coandä-Effekt in Richtung der Kornleitung K geleitet wird.

Insbesondere kann zudem oder alternativ vorgesehen sein, dass die erste Druckluftzufuhr D1 und die zweite Druckluftzufuhr D2 derartig zueinander angeordnet und/oder dimensioniert sind, dass im Einlassbereich KE die von der ersten Druckluftzufuhr D1 bereitgestellte Luftströmung aufgrund eines sich einstellenden Coandä-Effekt nicht in Richtung der Kornleitung K geleitet wird.

Zweckmäßig kann insbesondere vorgesehen sein, dass der Coandä-Effekt derartig entsteht dass die mittels der ersten Druckluftzufuhr D1 und die mittels der zweiten Druckluftzufuhr D2 zugeführten Luftströmungen und/oder Druckniveaus derartig zueinander angeordnet und/oder dimensioniert sind, dass mittels der zweiten Druckluftzufuhr D2 erzeugte Luftströmung entlang der mittels der ersten Druckluftzufuhr D1 erzeugten Luftströmung gleitet und/oder auf diese trifft. Zweckmäßig insbesondere von einer die zweite Druckluftzufuhr D2 bildenden Leitung in Richtung der Kornleitung K.

In der zweiten Druckluftzufuhr D2 kann zudem ein größerer statischer Druck anliegen und es können geringere Strömungsgeschwindigkeiten einer Luftströmung in dieser vorhanden sein als in einem Abgabebereich B2 und/oder in einer Kornleitung K. Insbesondere ist das Druckniveau in der zweiten Druckluftzufuhr D2 größer als das Druckniveau bzw. der Atmosphärendruck $P_{amb}$ am Auslassbereich KA der Kornleitung K. Durch die somit sich ergebende Druckdifferenz zwischen der zweiten Druckluftzufuhr D2 und der Kornleitung K wird eine Luftströmung in der Kornleitung K erzeugt, durch welche Luftströmung in der Kornleitung ein Druckluft-beschleunigter Transport der Körner S durch die Kornleitung K erzeugt wird. Insbesondere ist die somit in der Kornleitung K erzeugte Strömungsgeschwindigkeit der Luftströmung größer als eine Strömungsgeschwindigkeit einer Luftströmung aus der Kammer B1 in Richtung des Abgabebereichs B2, wodurch keine Luftströmung aus der Kammer B1 in der Kornleitung K erzeugt wird.

Mittels der ersten Druckluftzufuhr D1 wird in der Kammer B1 ein Druckniveau P1 erzeugt. Zudem ist vorgesehen, dass mittels der zweiten Druckluftzufuhr D2 im Abgabebereich B2 ein Druckniveau P2 erzeugt wird. Um eine Strömungsbarriere 170 zwischen der Kammer B1 und der Kornleitung K zu schaffen kann vorgesehen sein, dass das Druckniveau P1 kleiner oder gleich zum Druckniveau P2 ist, insbesondere jedoch dauerhaft größer ist und/oder dass die Querschnitte der ersten Druckluftzufuhr D1 und der zweiten Druckluftzufuhr D2 derartig dimensioniert sind, dass die Strömungsgeschwindigkeiten der Luftströme im Abgabebereich B2 größer als in der Kammer B1 ist.

Zur Unterbrechung der Druckdifferenz an den Aussparungen 151 des Vereinzelungsorgan 150 kann der Vereinzelungsvorrichtung 10 bzw. dem Vereinzelungsorgan 150 auf der gegenüberliegenden Seite der Körner S im Abgabebereich B2 ein Druckdifferenz-Unterbrechungselement UE zugeordnet sein. Wobei das Druckdifferenz-Unterbrechungselement UE einteilig oder mehrteilig ausgebildet sein kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

| | |
|---|---|
| 10 | Vereinzelungsvorrichtung |
| 50 | Reiheneinheit |
| 51 | Saatfurchenerzeugendes-Werkzeug |
| 52 | Saatfurchenschließendes-Werkzeug |
| 53 | Tiefenführungselement |
| 54 | Rahmenkonstruktion |
| 55 | Fangelement |
| 100 | Landwirtschaftliche Maschine |
| 101 | Träger |

| | |
|---|---|
| 102 | Träger |
| 150 | Vereinzelungsorgan |
| 151 | Aussparungen |
| 152 | Antrieb |
| 160 | Trennwand |
| 170 | Strömungsbarriere |
| 180 | Separiereinrichtung |
| B1 | Kammer |
| B2 | Abgabebereich |
| B3 | Separierungsbereich |
| S | Körner |
| D1 | erste Druckluftzufuhr |
| D2 | zweite Druckluftzufuhr |
| K | Kornleitung |
| KE | Einlassbereich |
| KA | Auslassbereich |
| T1 | Totaldruck Aufnahmebereich |
| T2 | Totaldruck Abgabebereich |
| P1 | Druckniveau Aufnahmebereich |
| P2 | Druckniveau Abgabebereich |
| $P_{amb}$ | Umgebungsdruck |
| R | Drehrichtung Vereinzelungsorgan |
| L | Luftleitung |
| G | Gehäuseteil Vereinzelungsvorrichtung |
| UE | Druckdifferenz-Unterbrechungselement |

**Patentansprüche**

1. Vereinzelungsvorrichtung (10), insbesondere zur Montage an eine landwirtschaftliche Reiheneinheit (50) und zur Druckdifferenz-basierten Vereinzelung von Körnern (S), mit:

    - einer Kammer (B1), vorzugsweise zur Aufnahme der Körner (S),
    - einem drehbaren Vereinzelungsorgan (150), wobei die Kammer (B1) zumindest in eine Richtung durch eine durch das Vereinzelungsorgan (150) gebildete Wand begrenzt ist und wobei mittels des Vereinzelungsorgans (150) Körner (S) aus der Kammer (B1) zu einem Abgabebereich (B2) transportiert werden,
    - einer ersten Druckluftzufuhr (D1), welche in die Kammer (B1) mündet und mittels der der Kammer (B1) Druckluft zur Erzeugung zumindest einer Druckdifferenz zuführbar ist, wobei das Vereinzelungsorgan (150) eine Vielzahl an Aussparungen (151) für die Körner (S) aufweist und die Körner (S) durch die durch die erste Druckluftzufuhr (D1) bereitgestellte Druckluft, Druckdifferenz-basiert in den Aussparungen (151) haltbar sind, wobei im Abgabebereich (B2) eine Abgabe vereinzelter Körner (S) in eine Kornleitung (K), zum Verteilen vereinzelter Körner (S) auf oder in einem Ackerboden erfolgt, und

einer zweiten Druckluftzufuhr (D2) zur Unterbindung einer Luftströmung aus der Kammer (B1) in die Kornleitung (K) und zum Druckluft-beschleunigten Transport der Körner (S) durch die Kornleitung (K), **dadurch gekennzeichnet**

    - **dass** die erste Druckluftzufuhr (D1) und die zweite Druckluftzufuhr (D2) derartig zueinander angeordnet und/oder dimensioniert sind, dass im Einlassbereich (KE) der Kornleitung (K) die von der zweiten Druckluftzufuhr (D2) bereitgestellte Luftströmung aufgrund eines sich einstellenden Coandä-Effekt in Richtung der Kornleitung (K) geleitet wird, und/oder
    - **dass** die erste Druckluftzufuhr (D1) und die zweite Druckluftzufuhr (D2) derartig zueinander angeordnet und/oder dimensioniert sind, dass im Einlassbereich (KE) der Kornleitung (K) die von der ersten Druckluftzufuhr (D2) bereitgestellte Luftströmung aufgrund eines sich einstellenden Coandä-Effekt nicht in Richtung der Kornleitung (K) geleitet wird.

2. Vereinzelungsvorrichtung (10) nach Anspruch 1, **dadurch gekennzeichnet, dass** die mittels der zweiten Druckluftzufuhr (D2) bereitgestellte Druckluft eine Strömungsbarriere (170) für die in der Kammer (B1) durch die erste Druckluftzufuhr (D1) bereitgestellte Druckluft in Richtung zur Kornleitung (K) bildet, wobei die Strömungsbarriere (170) insbesondere eine pneumatische Strömungsbarriere (170) bildet.

3. Vereinzelungsvorrichtung (10) nach Anspruch 1 oder 2, **dadurch gekennzeichnet, dass** der sich einstellende Totaldruck (T2) im Abgabebereich (B2) größer oder gleich zu einem sich einstellenden Totaldruck (T1) in der Kammer (B1) ist.

4. Vereinzelungsvorrichtung (10) nach Anspruch 3, **dadurch gekennzeichnet, dass** der sich einstellende Totaldruck (T2) im Abgabebereich (B2) zumindest um den Faktor 1,5 oder 2 oder 2,5 oder 3 größer ist zu einem sich einstellenden Totaldruck (T1) in der Kammer (B1).

5. Vereinzelungsvorrichtung (10) nach Anspruch 3, **dadurch gekennzeichnet, dass** der Totaldruck (T2) im Abgabebereich (B2) definiert ist, dass sich die durch die Druckluft aus der Kammer (B1) in Richtung des Abgabebereich (B2) ergebende Strömungsgeschwindigkeit bis zum Stillstand verringert.

6. Vereinzelungsvorrichtung (10) nach einem der vorhergehenden Ansprüche, **dadurch gekennzeichnet, dass** die Kornleitung (K) einen Einlassbereich (KE) und einen Auslassbereich (KA) aufweist, wobei am Auslassbereich (KA) der Atmosphärendruck ($P_{amb}$) anliegt.

7. Vereinzelungsvorrichtung (10) nach einem der vorhergehenden Ansprüche, **dadurch gekennzeichnet, dass** mittels der ersten Druckluftzufuhr (D1) in der Kammer (B1) ein erstes Druckniveau (P1) erzeugt wird und das mittels der zweiten Druckluftzufuhr (D2) im Abgabebereich (B2) ein zweites Druckniveau (P2) erzeugt wird, wobei das erste Druckniveau (P1) kleiner oder gleich zum zweiten Druckniveau (P2) ist.

8. Vereinzelungsvorrichtung (10) nach Anspruch 7, **dadurch gekennzeichnet, dass** das erste Druckniveau (P1) größer oder gleich zum Atmosphärendruck ($P_{amb}$), insbesondere jedoch größer als der Atmosphärendruck ($P_{amb}$) ist.

9. Vereinzelungsvorrichtung (10) nach einem der vorhergehenden Ansprüche, **dadurch gekennzeichnet, dass** die Strömungsbarriere (170) pneumatisch in Abhängigkeit des ersten Druckniveau (P1) und des zweiten Druckniveau (P2) erzeugt wird und/oder dass die Strömungsbarriere (170) in Abhängigkeit des Totaldruck (T1) und des Totaldruck (T2) erzeugt wird.

10. Vereinzelungsvorrichtung (10 ) nach einem der vorhergehenden Ansprüche, **dadurch gekennzeichnet, dass** dem Vereinzelungsorgan (150) auf der gegenüberliegenden Seite der Körner (S) ein Druckdifferenz-Unterbrechungselement (UE) zugeordnet ist, wobei das Druckdifferenz-Unterbrechungselement (UE) zumindest abschnittweise gegenüber der sich einstellenden Strömungsbarriere (170) und/oder in Drehrichtung (R) des Vereinzelungsorgan (150) nach dieser Strömungsbarriere (170) angeordnet ist.

11. Vereinzelungsvorrichtung (10) nach einem der vorhergehenden Ansprüche, **dadurch gekennzeichnet, dass** die zweite Druckluftzufuhr quer in den Abgabebereich (B2) mündet.

12. Vereinzelungsvorrichtung (10) nach einem der vorhergehenden Ansprüche, **dadurch gekennzeichnet, dass** die Kammer (B1) und der Abgabebereich (B2) durch eine Trennwand (160) getrennt sind.

13. Vereinzelungsvorrichtung (10) nach einem der vorhergehenden Ansprüche, **dadurch gekennzeichnet, dass** die mittels der zweiten Druckluftzufuhr (D2) bereitgestellte Druckluft und/oder Luftströmung derart definiert und dimensioniert ist, dass diese geringere Strömungsgeschwindigkeiten und ein größeres statisches Druckniveau aufweisen, als die durch diese bereitgestellte Druckluft und/oder Luftströmung in einer Kornleitung (K) erzeugten Strömungsgeschwindigkeiten einer Luftströmung und statische Druckniveaus.

14. Vereinzelungsvorrichtung (10) nach einem der vorhergehenden Ansprüche, **dadurch gekennzeichnet, dass** die erste Druckluftzufuhr (D1) und/oder die zweite Druckluftzufuhr (D2) einen oder mehrere Druckluftanschlüsse in der Kammer (B1) und/oder im Abgabebereich (B2) und/oder in der Kornleitung (K) aufweisen, wobei die Druckluftanschlüsse der ersten Druckluftzufuhr (D1) und/oder der zweiten Druckluftzufuhr (D2) jeweils mit einem gleichen oder unterschiedlichen Druckniveau beaufschlagt werden und gleiche oder unterschiedliche Querschnitte aufweisen.

15. Vereinzelungsvorrichtung (10) nach einem der vorhergehenden Ansprüche, **dadurch gekennzeichnet, dass** das mittels der ersten Druckluftzufuhr (D1) und/oder das mittels der zweiten Druckluftzufuhr (D2) bereitgestellte erste und/oder zweite Druckniveau (P1; P2) und/oder dessen Strömungsquerschnitte variabel einstellbar und/oder regelbar sind, insbesondere mittels einer Steuerungs- und/oder Regelungseinrichtung variabel einstellbar und/oder regelbar sind.

16. Vereinzelungsvorrichtung (10) nach einem der vorhergehenden Ansprüche, **dadurch gekennzeichnet, dass** die erste Druckluftzufuhr (D1) und die zweite Druckluftzufuhr (D2) an einer gemeinsamen und/oder an verschiedenen, insbesondere einer landwirtschaftlichen Maschine (100) und/oder der Reiheneinheit (50) zugeordneten Druckluftquellen angeschlossen sind.

17. Vereinzelungsvorrichtung (10) nach einem der vorhergehenden Ansprüche, **dadurch gekennzeichnet, dass** eine die zweite Druckluftzufuhr (D2) bildende Luftleitung (L) relativ zum Vereinzelungsorgan (150) angeordnet ist und zwar in einem Winkel $\alpha$ zum Vereinzelungsorgan (150), wobei der Winkel $\alpha$ in einem Bereich zwischen 0° und 90° liegt.

18. Vereinzelungsvorrichtung (10) nach einem der vorhergehenden Ansprüche, **dadurch gekennzeichnet, dass** die, die zweite Druckluftzufuhr (D2) bildende Luftleitung (L) in einem Winkel $\beta$ zur Kornleitung (K) angeordnet ist, wobei der Winkel $\beta$ in einem

Bereich zwischen 90° und 170° liegt.

19. Vereinzelungsvorrichtung (10) nach einem der vorhergehenden Ansprüche, **dadurch gekennzeichnet, dass** die, die zweite Druckluftzufuhr (D2) bildende Luftleitung (L) und die Kornleitung (K) durch eine, durch einen durchgängigen und/oder bogenförmig gekrümmten Rohrabschnitt gebildete, Leitung gebildet sind.

20. Vereinzelungsvorrichtung (10) nach Anspruch 19, **dadurch gekennzeichnet, dass**

   - die Leitung einen den Einlassbereich (KE) bildenden Ausschnitt aufweist und vorzugsweise der Ausschnitt in der Mantelfläche der Leitung ausgebildet ist und/oder im Bereich des Vereinzelungsorgans (150) angeordnet ist, und/oder
   - die Leitung einen konstanten Durchlassquerschnitt oder einen sich kontinuierlich verändernden Durchlassquerschnitt aufweist, und/oder
   - das Vereinzelungsorgan (150) abschnittsweise eine Seitenwand der Leitung bildet.

21. Vereinzelungsvorrichtung (10) nach einem der vorhergehenden Ansprüche, **dadurch gekennzeichnet, dass** der Abschnitt der Leitung, welcher die zweite Druckluftzufuhr (D2) ausbildet, und der Abschnitt der Leitung, welcher die Kornleitung (K) ausbildet, in einem Winkel β zwischen vorzugsweise 90° und 170° zueinander angeordnet sind und/oder diese einen zumindest abschnittweise bogenförmigen Übergangsbereich aufweisen.

22. Verfahren zur Vereinzelung von Körner (S), insbesondere zur Druckdifferenz-basierten Vereinzelung von Körner (S), umfassend zumindest die Schritte:

   - Bereitstellung und vorzugsweise Aufnahme von Körner (S) mittels einer Kammer (B1),
   - Transport der Körner (S) von einer Kammer (B1) zu einem Abgabebereich (B2) mittels eines drehbarem Vereinzelungsorgan (150), wobei die Kammer (B1) zumindest in eine Richtung durch eine durch das Vereinzelungsorgan (150) gebildete Wand begrenzt ist,
   - Erzeugung zumindest einer Druckdifferenz in der Kammer (B1) mittels einer ersten Druckluftzufuhr (D1), welche in der Kammer (B1) mündet, wobei das Vereinzelungsorgan (150) eine Vielzahl an Aussparungen (151) für die Körner (S) aufweist und die Körner (S) durch die durch die erste Druckluftzufuhr (D1) bereitgestellte Druckluft, Druckdifferenz-basiert in den Aussparungen (151) haltbar sind,
   - Abgabe vereinzelter Körner (S) in eine Kornleitung (K), im Abgabebereich (B2), zum Verteilen vereinzelter Körner (S) auf oder in einem Ackerboden, wobei eine Unterbindung einer Luftströmung aus der Kammer (B1) in die Kornleitung (K) und durch einen Druckluft-beschleunigten Transport der Körner durch die Kornleitung (K) mittels der durch die zweite Druckluftzufuhr (D2) bereitgestellten Druckluft, **dadurch gekennzeichnet, dass** das Verfahren mit einer Vereinzelungsvorrichtung nach einem der Ansprüche 1-21 ausgeführt wird.

23. Reiheneinheit (50), umfassend eine Vereinzelungsvorrichtung (10) nach einem der Ansprüche 1 bis 21, wobei die Reiheneinheit (50) ein Fangelement (55) umfasst, gegen das Körner (S) Druckluft-beschleunigt aus der Kornleitung (K) geschossen werden können und das das Fangelement (55) über ein Schnellwechselsystem montiert ist und/oder ausgeführt ist, um mittels einer Vorspannung gegen den Ackerboden gedrückt zu werden.

**Claims**

1. Individualizing device (10), in particular for assembling on an agricultural row unit (50) and for individualizing grains (S) on the basis of a pressure difference, comprising:

   - a chamber (B1), preferably for receiving the grains (S),
   - a rotatable individualizing element (150), wherein the chamber (B1) is delimited in at least one direction by a wall formed by the individualizing element (150) and wherein grains (S) are transported from the chamber (B1) to a dispensing region (B2) by means of the individualizing element (150),
   - a first compressed air supply (D1) which opens into the chamber (B1) and by means of which the chamber (B1) can be supplied with compressed air in order to generate at least one pressure difference, wherein the individualizing element (150) has a plurality of recesses (151) for the grains (S), and the grains (S) can be held in the recesses (151) on the basis of the pressure difference using the compressed air provided by the first compressed air supply (D1), wherein grains (S) are dispensed in an individualized manner into a grain line (K) in the dispensing region (B2), in order to distribute grains (S) in an individualized manner on or in cropping soil, and

   a second compressed air supply (D2) in order to prevent a flow of air out of the chamber (B1) into the grain line (K) and in order to transport the grains (S) through the grain line (K) in an accelerated manner by means of compressed air, **characterized**

- **in that** the first compressed air supply (D1) and the second compressed air supply (D2) are arranged and/or dimensioned relative to one another such that in the inlet region (KE) of the grain line (K) the flow of air provided by the second compressed air supply (D2) is conducted in the direction of the grain line (K), due to a Coanda effect which is present, and/or
- **in that** the first compressed air supply (D1) and the second compressed air supply (D2) are arranged and/or dimensioned relative to one another such that in the inlet region (KE) of the grain line (K) the flow of air provided by the first compressed air supply (D2) is not conducted in the direction of the grain line (K), due to a Coanda effect which is present.

2. Individualizing device (10) according to Claim 1, **characterized in that** the compressed air provided by means of the second compressed air supply (D2) forms a flow barrier (170) for the compressed air provided in the chamber (B1) by the first compressed air supply (D1) in the direction of the grain line (K), wherein the flow barrier (170), in particular, forms a pneumatic flow barrier (170).

3. Individualizing device (10) according to Claim 1 or 2, **characterized in that** the total pressure (T2) present in the dispensing region (B2) is greater than or equal to a total pressure (T1) present in the chamber (B1).

4. Individualizing device (10) according to Claim 3, **characterized in that** the total pressure (T2) present in the dispensing region (B2) is greater at least by the factor of 1.5 or 2 or 2.5 or 3 than a total pressure (T1) present in the chamber (B1).

5. Individualizing device (10) according to Claim 3, **characterized in that** the total pressure (T2) in the dispensing region (B2) is defined such that the flow rate generated by the compressed air from the chamber (B1) in the direction of the dispensing region (B2) is reduced to a standstill.

6. Individualizing device (10) according to one of the preceding claims, **characterized in that** the grain line (K) comprises an inlet region (KE) and an outlet region (KA), wherein atmospheric pressure ($P_{amb}$) is applied to the outlet region (KA).

7. Individualizing device (10) according to one of the preceding claims, **characterized in that** a first pressure level (P1) is generated in the chamber (B1) by means of the first compressed air supply (D1) and **in that** a second pressure level (P2) is generated in the dispensing region (B2) by means of the second compressed air supply (D2), wherein the first pressure level (P1) is less than or equal to the second pressure level (P2).

8. Individualizing device (10) according to Claim 7, **characterized in that** the first pressure level (P1) is greater than or equal to atmospheric pressure ($P_{amb}$), but in particular greater than atmospheric pressure ($P_{amb}$).

9. Individualizing device (10) according to one of the preceding claims, **characterized in that** the flow barrier (170) is generated pneumatically as a function of the first pressure level (P1) and the second pressure level (P2) and/or **in that** the flow barrier (170) is generated as a function of the total pressure (T1) and the total pressure (T2).

10. Individualizing device (10) according to one of the preceding claims, **characterized in that** the individualizing element (150) is assigned a pressure difference interrupting element (UE) on the opposing side of the grains (S), wherein the pressure difference interrupting element (UE) is arranged at least partially opposite the flow barrier (170) which is present and/or in the rotational direction (R) of the individualizing element (150) downstream of this flow barrier (170).

11. Individualizing device (10) according to one of the preceding claims, **characterized in that** the second compressed air supply opens transversely into the dispensing region (B2).

12. Individualizing device (10) according to one of the preceding claims, **characterized in that** the chamber (B1) and the dispensing region (B2) are separated by a partition (160).

13. Individualizing device (10) according to one of the preceding claims, **characterized in that** the compressed air and/or flow of air provided by means of the second compressed air supply (D2) is defined and dimensioned such that they have lower flow rates and a greater static pressure level than the flow rates of a flow of air and the static pressure levels generated by the compressed air and/or the flow of air provided thereby in a grain line (K).

14. Individualizing device (10) according to one of the preceding claims, **characterized in that** the first compressed air supply (D1) and/or the second compressed air supply (D2) have one or more compressed air connections in the chamber (B1) and/or in the dispensing region (B2) and/or in the grain line (K), wherein the compressed air connections of the first compressed air supply (D1) and/or the second compressed air supply (D2) in each case are subjected to an equal or different pressure level and have equal or different cross sections.

15. Individualizing device (10) according to one of the preceding claims, **characterized in that** the first and/or second pressure level (P1; P2) provided by means of the first compressed air supply (D1) and/or by means of the second compressed air supply (D2) and/or the flow cross sections are adjustable and/or regulatable in a variable manner, in particular are adjustable and/or regulatable in a variable manner by means of a control and/or regulating device.

16. Individualizing device (10) according to one of the preceding claims, **characterized in that** the first compressed air supply (D1) and the second compressed air supply (D2) are attached to a common and/or to different compressed air sources, in particular assigned to an agricultural machine (100) and/or the row unit (50).

17. Individualizing device (10) according to one of the preceding claims, **characterized in that** an air line (L) forming the second compressed air supply (D2) is arranged relative to the individualizing element (150) and namely at an angle $\alpha$ from the individualizing element (150), wherein the angle $\alpha$ ranges between 0° and 90°.

18. Individualizing device (10) according to one of the preceding claims, **characterized in that** the air line (L) forming the second compressed air supply (D2) is arranged at an angle $\beta$ from the grain line (K), wherein the angle $\beta$ ranges between 90° and 170°.

19. Individualizing device (10) according to one of the preceding claims, **characterized in that** the air line (L) forming the second compressed air supply (D2) and the grain line (K) are formed by a line which is formed by a tube portion which is continuous and/or curved in an arcuate manner.

20. Individualizing device (10) according to Claim 19, **characterized in that**

- the line has a cutout forming the inlet region (KE) and preferably the cutout is formed in the outer surface of the line and/or is arranged in the region of the individualizing element (150), and/or
- the line has a uniform passage cross section or a passage cross section which continuously changes, and/or
- the individualizing element (150) partially forms a side wall of the line.

21. Individualizing device (10) according to one of the preceding claims, **characterized in that** the portion of the line which forms the second compressed air supply (D2) and the portion of the line which forms the grain line (K) are arranged at an angle $\beta$ of preferably between 90° and 170° to one another and/or these portions have an at least partially arcuate transition region.

22. Method for individualizing grains (S), in particular for individualizing grains (S) on the basis of a pressure difference, comprising at least the steps:

- providing and preferably receiving grains (S) by means of a chamber (B1),
- transporting the grains (S) from a chamber (B1) to a dispensing region (B2) by means of a rotatable individualizing element (150), wherein the chamber (B1) is defined in at least one direction by a wall formed by the individualizing element (150),
- generating at least a pressure difference in the chamber (B1) by means of a first compressed air supply (D1) which opens into the chamber (B1), wherein the individualizing element (150) has a plurality of recesses (151) for the grains (S) and the grains (S) are able to be held in the recesses (151) on the basis of a pressure difference, by the compressed air provided by the first compressed air supply (D1),
- dispensing individualized grains (S) into a grain line (K) in the dispensing region (B2) in order to distribute individualized grains (S) on or in cropping soil,
- preventing a flow of air from the chamber (B1) into the grain line (K) and by transporting the grains through the grain line (K) in an accelerated manner by means of compressed air, by means of the compressed air provided by the second compressed air supply (D2), **characterized in that** the method is carried out by an individualizing device according to one of Claims 1-21.

23. Row unit (50) comprising an individualizing device (10) according to one of Claims 1 to 21, wherein the row unit (50) comprises a catching element (55), grains (S) being able to be shot out of the grain line (K) in an accelerated manner by means of compressed air counter to said catching element, and in that the catching element (55) is assembled and/or designed via a quick change system in order to be pushed by means of pretensioning against the cropping soil.

**Revendications**

1. Dispositif de séparation (10), en particulier pour le montage sur un élément semeur agricole (50) et pour la séparation basée sur une différence de pression de graines (S), présentant :

- une chambre (B1), de préférence destinée à recevoir les graines (S),
- un organe de séparation (150) rotatif, la chambre (B1) étant limitée au moins dans une direction par une paroi formée par l'organe de séparation (150) et des graines (S) étant transportées hors de la chambre (B1) vers une zone de distribution (B2) au moyen de l'organe de séparation (150),
- une première alimentation en air comprimé (D1), qui débouche dans la chambre (B1) et au moyen de laquelle la chambre (B1) peut être alimentée en air comprimé pour la génération d'au moins une différence de pression, l'organe de séparation (150) présentant une multitude d'évidements (151) pour les graines (S) et les graines (S) pouvant être maintenues dans les évidements (151) par l'air comprimé mis à disposition par la première alimentation en air comprimé (D1) et sur la base d'une différence de pression, une distribution de graines (S) séparées ayant lieu dans la zone de distribution (B2) dans une conduite à graines (K) pour la répartition de graines (S) séparées sur ou dans des terres arables et une seconde alimentation en air comprimé (D2) pour la suppression d'un écoulement d'air hors de la chambre (B1) dans la conduite à graines (K) et pour le transport accéléré par l'air comprimé des graines (S) à travers la conduite à graines (K), **caractérisé**

- **en ce que** la première alimentation en air comprimé (D1) et la seconde alimentation en air comprimé (D2) sont agencées l'une par rapport à l'autre et/ou dimensionnées de telle sorte que, dans la zone d'entrée (KE) de la conduite à graines (K), l'écoulement d'air mis à disposition par la seconde alimentation en air comprimé (D2) est guidé en direction de la conduite à graines (K) en raison d'un effet Coandă qui s'établit et/ou

- **en ce que** la première alimentation en air comprimé (D1) et la seconde alimentation en air comprimé (D2) sont agencées l'une par rapport à l'autre et/ou dimensionnées de telle sorte que, dans la zone d'entrée ((KE) de la conduite à graines (K), l'écoulement d'air mis à disposition par la première alimentation en air comprimé (D2) n'est pas guidé en direction de la conduite à graines (K) en raison d'un effet Coandă qui s'établit.

2. Dispositif de séparation (10) selon la revendication 1, **caractérisé en ce que** l'air comprimé mis à disposition au moyen de la seconde alimentation en air comprimé (D2) forme une barrière à l'écoulement (170) pour l'air comprimé, mis à disposition dans la chambre (B1) par la première alimentation en air comprimé (D1), en direction de la conduite à graines (K), la barrière à l'écoulement (170) formant en particulier une barrière à l'écoulement (170) pneumatique.

3. Dispositif de séparation (10) selon la revendication 1 ou 2, **caractérisé en ce que** la pression totale (T2) qui s'établit dans la zone de distribution (B2) est supérieure ou égale à une pression totale (T1) qui s'établit dans la chambre (B1).

4. Dispositif de séparation (10) selon la revendication 3, **caractérisé en ce que** la pression totale (T2) qui s'établit dans la zone de distribution (B2) est supérieure d'un facteur 1,5 ou 2 ou 2,5 ou 3 à une pression totale (T1) qui s'établit dans la chambre (B1).

5. Dispositif de séparation (10) selon la revendication 3, **caractérisé en ce que** la pression totale (T2) dans la zone de distribution (B2) est définie de telle sorte que la vitesse d'écoulement obtenue par l'air comprimé hors de la chambre (B1) en direction de la zone de distribution (B2) diminue jusqu'à l'arrêt.

6. Dispositif de séparation (10) selon l'une des revendications précédentes, **caractérisé en ce que** la conduite à graines (K) présente une zone d'entrée (KE) et une zone de sortie (KA), la zone de sortie (KA) se trouvant à la pression atmosphérique ($P_{amb}$).

7. Dispositif de séparation (10) selon l'une des revendications précédentes, **caractérisé en ce qu'**un premier niveau de pression (P1) est généré au moyen de la première alimentation en air comprimé (D1) dans la chambre (B1) et, au moyen de la seconde alimentation en air comprimé (D2), un second niveau de pression (P2) est généré dans la zone de distribution (B2), le premier niveau de pression (P1) étant inférieur ou égal au second niveau de pression (P2).

8. Dispositif de séparation (10) selon la revendication 7, **caractérisé en ce que** le premier niveau de pression (P1) est supérieur ou égal à la pression atmosphérique ($P_{amb}$), en particulier cependant supérieur à la pression atmosphérique ($P_{amb}$).

9. Dispositif de séparation (10) selon l'une des revendications précédentes, **caractérisé en ce que** la barrière à l'écoulement (170) est générée pneumatiquement en fonction du premier niveau de pression (P1) et du second niveau de pression (P2) et/ou **en ce que** la barrière à l'écoulement (170) est générée en fonction de la pression totale (T1) et de la pression totale (T2).

10. Dispositif de séparation (10) selon l'une des revendications précédentes, **caractérisé en ce qu'**un élément d'interruption de la différence de pression (UE) est associé à l'organe de séparation (150) sur le côté opposé aux graines (S), l'élément d'interruption de la différence de pression (UE) étant agencé au moins par sections face à la barrière à l'écoulement (170) qui s'établit et/ou, dans le sens de rotation (R) de l'organe de séparation (150), après cette barrière à l'écoulement (170) .

11. Dispositif de séparation (10) selon l'une des revendications précédentes, **caractérisé en ce que** la seconde alimentation en air comprimé débouche transversalement dans la zone de distribution (B2).

12. Dispositif de séparation (10) selon l'une des revendications précédentes, **caractérisé en ce que** la chambre (B1) et la zone de distribution (B2) sont séparées par une paroi de séparation (160).

13. Dispositif de séparation (10) selon l'une des revendications précédentes, **caractérisé en ce que** l'air comprimé et/ou l'écoulement d'air mis à disposition au moyen de la seconde alimentation en air comprimé (D2) est/sont défini(s) et dimensionné(s) de telle sorte qu'il(s) présente(nt) des vitesses d'écoulement plus basses et un niveau de pression statique plus élevé que les vitesses d'écoulement d'un écoulement d'air et que les niveaux de pression statiques générés dans une conduite à graines (K) par cet air comprimé et/ou cet écoulement d'air mis à disposition.

14. Dispositif de séparation (10) selon l'une des revendications précédentes, **caractérisé en ce que** la première alimentation en air comprimé (D1) et/ou la seconde alimentation en air comprimé (D2) présente(nt) un ou plusieurs raccords à air comprimé dans la chambre (B1) et/ou dans la zone de distribution (B2) et/ou dans la conduite à graines (K), les raccords à air comprimé de la première alimentation en air comprimé (D1) et/ou de la seconde alimentation en air comprimé (D2) étant à chaque fois soumis à un niveau de pression identique ou différent et présentant des sections transversales identiques ou différentes.

15. Dispositif de séparation (10) selon l'une des revendications précédentes, **caractérisé en ce que** le premier et/ou le second niveau de pression (P1, P2) et/ou leurs sections transversales d'écoulement, mis à disposition au moyen de la première alimentation en air comprimé (D1) et/ou au moyen de la seconde alimentation en air comprimé (D2), est/sont réglables et/ou régulables de manière variable, en particulier réglables et/ou régulables de manière variable au moyen d'un équipement de commande et/ou de régulation.

16. Dispositif de séparation (10) selon l'une des revendications précédentes, **caractérisé en ce que** la première alimentation en air comprimé (D1) et la seconde alimentation en air comprimé (D2) sont raccordées à une source d'air comprimé commune et/ou à différentes sources d'air comprimé, en particulier associée(s) à une machine agricole (100) et/ou à l'élément semeur (50).

17. Dispositif de séparation (10) selon l'une des revendications précédentes, **caractérisé en ce qu'**une conduite à air (L) formant la seconde alimentation en air comprimé (D2) est agencée par rapport à l'organe de séparation (150) et ce sous un angle α par rapport à l'organe de séparation (150), l'angle α se situant dans une plage entre 0° et 90°.

18. Dispositif de séparation (10) selon l'une des revendications précédentes, **caractérisé en ce que** la conduite à air (L) formant la seconde alimentation en air comprimé (D2) est agencée sous un angle β par rapport à la conduite à graines (K), l'angle β se situant dans une plage entre 90° et 170°.

19. Dispositif de séparation (10) selon l'une des revendications précédentes, **caractérisé en ce que** la conduite à air (L) formant la seconde alimentation en air comprimé (D2) et la conduite à graines (K) sont formées par une conduite formée par une section tubulaire continue et/ou courbée sous forme d'arc.

20. Dispositif de séparation (10) selon la revendication 19, **caractérisé en ce que**

- la conduite présente une découpe formant la zone d'entrée (KE) et, de préférence, la découpe est réalisée dans la surface enveloppante de la conduite et/ou agencée dans la zone de l'organe de séparation (150) et/ou
- la conduite présente une section transversale de passage constante ou une section transversale de passage qui se modifie en continu et/ou
- l'organe de séparation (150) forme par sections une paroi latérale de la conduite.

21. Dispositif de séparation (10) selon l'une des revendications précédentes, **caractérisé en ce que** la section de la conduite qui forme la seconde alimentation en air comprimé (D2) et la section de la conduite qui forme la conduite à graines (K) sont agencées sous un angle β entre de préférence 90° et 170° l'une par rapport à l'autre et/ou celles-ci présentent au moins par sections une zone de transition en forme d'arc.

22. Procédé de séparation de graines (S), en particulier pour la séparation de graines (S) basée sur une différence de pression, comprenant au moins les étapes :

- mise à disposition et de préférence réception de graines (S) au moyen d'une chambre (B1),
- transport des graines (S) à partir d'une chambre (B1) vers une zone de distribution (B2) au moyen d'un organe de séparation (150) rotatif, la chambre (B1) étant limitée au moins dans une direction par une paroi formant l'organe de séparation (150),
- génération d'au moins une différence de pression dans la chambre (B1) au moyen d'une première alimentation en air comprimé (D1) qui débouche dans la chambre (B1), l'organe de séparation (150) présentant une multitude d'évidements (151) pour les graines (S) et les graines (S) pouvant être maintenues dans les évidements (151) par l'air comprimé mis à disposition par la première alimentation en air comprimé (D1) et sur la base d'une différence de pression,
- distribution de graines (S) séparées dans une conduite à graines (K), dans la zone de distribution (B2), pour la répartition de graines (S) séparées sur ou dans des terres arables, une suppression d'un écoulement d'air hors de la chambre (B1) dans la conduite à graines (K) et par un transport, accéléré par l'air comprimé, des graines à travers la conduite à graines (K) au moyen de l'air comprimé mis à disposition par la seconde alimentation en air comprimé (D2), **caractérisé en ce que** le procédé est mis en œuvre à l'aide d'un dispositif de séparation selon l'une des revendications 1-21.

23. Élément semeur (50), comprenant un dispositif de séparation (10) selon l'une des revendications 1 à 21, l'élément semeur (50) comprenant un organe de capture (55) contre lequel des graines (S) peuvent être tirées de manière accélérée par l'air comprimé hors de la conduite à graines (K) et l'organe de capture (55) étant monté et/ou exécuté par l'intermédiaire d'un système de changement rapide afin de pouvoir être poussé au moyen d'une précontrainte contre les terres arables.

*Fig. 1*

*Fig. 2*

*Fig. 3A*

Fig. 3B

EP 3 820 270 B1

Fig. 4A

Fig. 4B

Fig. 5

**EP 3 820 270 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014182495 A1
- DE 102007062967 A1
- WO 2015149728 A1
- EP 0037775 A1
- WO 2010059101 A1
- EP 3050419 B1